# EUROPÄISCHE PATENTSCHRIFT

(11) **EP 3 655 760 B1**
(45) Veröffentlichungstag und Bekanntmachung des Hinweises auf die Patenterteilung: **02.03.2022**
(21) Anmeldenummer: 17746034.2
(22) Anmeldetag: 21.07.2017
(51) Int. Cl.: G01N 21/39

(54) **VERFAHREN UND MESSSYSTEM ZUR BESTIMMUNG VON FREMDGASEN IN ETHYLEN**
METHOD AND MEASURING SYSTEM FOR DETERMINING FOREIGN GASES IN ETHYLENE
PROCÉDÉ ET SYSTÈME DE MESURE PERMETTANT DE DÉTERMINER DES GAZ ÉTRANGERS DANS DE L'ÉTHYLÈNE

(43) Veröffentlichungstag der Anmeldung: 27.05.2020
(73) Patentinhaber: Siemens Aktiengesellschaft, 80333 München (DE)
(72) Erfinder: POPESCU, Alexandru, 81673 München (DE); HÖRNER, Thomas, 76133 Karlsruhe (DE)
(86) Internationale Anmeldenummer: PCT/EP2017/068538
(87) Internationale Veröffentlichungsnummer: WO 2019/015784

(56) Entgegenhaltungen:
- EP-A1- 3 081 922
- LUNDQVIST S ET AL: "Process analytical applications in the mid-infrared", QUANTUM SENSING AND NANOPHOTONIC DEVICES VIII, SPIE, 1000 20TH ST. BELLINGHAM WA 98225-6705 USA, Bd. 7945, Nr. 1, 22. Januar 2011 (2011-01-22), Seiten 1-10, XP060010423, DOI: 10.1117/12.871571 [gefunden am 1901-01-01]
- KLUCZYNSKI P ET AL: "Detection of acetylene impurities in ethylene and polyethylene manufacturing processes using tunable diode laser spectroscopy in the 3-Î 1/4 m range", APPLIED PHYSICS B ; LASERS AND OPTICS, SPRINGER, BERLIN, DE, Bd. 105, Nr. 2, 30. Juli 2011 (2011-07-30) , Seiten 427-434, XP019964614, ISSN: 1432-0649, DOI: 10.1007/S00340-011-4645-6 in der Anmeldung erwähnt
- Anonymous: "SpectraSensors TDLAS Analyzers for Olefins Production", Product Information, 1. Dezember 2016 (2016-12-01), XP055437476, Gefunden im Internet: URL:https://www.spectrasensors.com/media/f iles/files/8bcccc14/SpectraSensors_Brochur e_Olefins-LR.pdf [gefunden am 2017-12-21]
- JOHNSTONE W ET AL: "Tunable Diode Laser Spectroscopy for Industrial Process Applications: System Characterization in Conventional and New Approaches", IEEE SENSORS JOURNAL, IEEE SERVICE CENTER, NEW YORK, NY, US, Bd. 8, Nr. 7, 1. Juli 2008 (2008-07-01), Seiten 1079-1088, XP011231360, ISSN: 1530-437X, DOI: 10.1109/JSEN.2008.926168

## Beschreibung

Die Erfindung betrifft ein Verfahren und ein Messsystem zur Bestimmung von Fremdgasen in Ethylen mit einem Reinheitsgrad bis größer als 99%.

Ethylen (Ethen) ist einer der wichtigsten Rohstoffe der chemischen Industrie und Ausgangsprodukt für eine Vielzahl von petrochemischen Produkten (z. B. Polyethylen, Polyvinylacetat, Polystyrol, Polyvinylchlorid, Zelluloseacetat). Die Herstellung von Ethylen erfolgt großtechnisch durch thermische Spaltung von Erdölfraktionen (z. B. Naphtha, Gasöl) oder gasförmigen Kohlenwasserstoffen in Anwesenheit von Wasserdampf (Steam Cracking). Die dabei anfallenden Crackgase werden einer vielstufigen destillativen Aufarbeitung unterworfen, bis die reinen Endprodukte, darunter Ethylen, vorliegen. Die Destillation ist aufwendig, weil sehr hohe Reinheitsgrade erforderlich sind. So muss Ethylen in Reinheiten von über 99 % vorliegen, um in der Polymerisation eingesetzt werden zu können.

Um die hohen Reinheitsanforderung bei der Herstellung von Ethylen zu erfüllen und ggf. in dem Prozess einwirken zu können, ist es erforderlich, kleinste Konzentrationen von Fremdgase in dem Endprodukt schnell zu messen.

S. Lundqvist et al.: "Process analytical applications in the mid-infrared", Quantum Sensing and Nanophotonic Devices VIII, SPIE, Bd. 7945, Nr. 1, 22. Januar 2011, Seiten 1-10 und gleichermaßen P. Kluczynski et al.: "Detection of acetylene impurities in ethylene and polyethylene manufacturing processes using tunable diode laser spectroscopy in the 3-pm range", Applied Physics B: Lasers and Optics, Bd. 105, Nr. 2, 30. Juli 2011, Seiten 427-434, zeigen die Möglichkeit auf, Verunreinigungen von reinem Ethylen durch Acetylen (Ethin) in einem Messbereich von 0-5 ppm durch Diodenlaser-Absorptionsspektroskopie (Tunable Diode Laser Absorption Spectroscopy - TDLAS) in einer Acetylen-Absorptionsbande zwischen 2975 und 3125 nm nachzuweisen, die frei von Einflüssen störender Kohlenwasserstoffe wie Ethylen, Ethan, Propan und Propylen (Propen) ist. In diesem Wellenlängenintervall liegen starke isolierte Acetylen-Linien vor, von denen in der vorgelegten Studie die Absorptionslinie um 3059,56 nm zur Bestimmung der Acetylen-Konzentration herangezogen wird. Die Messung erfolgt nach dem Verfahren der Wellenlängen-Modulationsspektroskopie (Wavelength Modulation Spectroscopy - WMS), wobei die Wellenlänge des Lichts eines durchstimmbaren Diodenlasers periodisch über die interessierende Absorptionslinie variiert und zusätzlich mit hoher Frequenz und kleiner Amplitude sinusförmig moduliert wird; die Intensität des Lichts wird nach Durchstrahlen des mit Acetylen verunreinigten Ethylens detektiert und bei der doppelten Modulationsfrequenz (2f-WMS) ausgewertet.

Aus "SpectraSensors TDLAS Analyzers for Olefins Production", Product Information, 1. Dezember 2016, ist es bekannt, bei der Produktion von Olefinen Fremdgase wie Acetylen, Kohlendioxid und Ammoniak mittels Diodenlaser-Absorptionsspektroskopie zu messen.

Der Erfindung liegt die Aufgabe zugrunde, die Reinheit von Ethylen bei dessen Herstellung zu überprüfen.

Gemäß der Erfindung wird die Aufgabe durch das in Anspruch 1 angegebene Verfahren und das in Anspruch 30 definierte Messsystem gelöst, von denen vorteilhafte Weiterbildungen in den Unteransprüchen angegeben sind.

Gegenstand der Erfindung ist somit ein Verfahren zur Bestimmung von Fremdgasen in Ethylen mit einem Reinheitsgrad bis größer als 99%, bei dem eine Probe des Ethylens in einer Messzelle mit Licht durchstrahlt wird, die Wellenlänge des Lichts variiert wird, um ausgewählte Absorptionslinien der Fremdgase Acetylen, Kohlendioxid, Kohlenmonoxid und Ammoniak wellenlängenabhängig abzutasten, das Licht nach Durchstrahlen der Probe detektiert wird und die Konzentrationen der Fremdgase anhand der wellenlängenspezifischen Absorption des Lichts an den Stellen der abgetasteten Absorptionslinien bestimmt werden,
wobei das Licht (14) mithilfe von vier durchstimmbaren Lasern in vier Wellenlängenbereichen erzeugt wird, von denen
- der erste Wellenlängenbereich die Wellenlänge einer aus den Acetylen-Absorptionslinien bei 3,02575 µm, 3,0223 µm, 3,0099 µm oder 7,423 µm zur Abtastung ausgewählten Absorptionslinie enthält,
- der zweite Wellenlängenbereich die Wellenlänge einer aus den Kohlendioxid-Absorptionslinien bei 4,2347 µm, 4,2396 µm, 4,23225 µm oder 4,2875 µm zur Abtastung ausgewählten Absorptionslinie enthält,
- der dritte Wellenlängenbereich die Wellenlänge einer aus den Kohlenmonoxid-Absorptionslinien bei 4,61 µm, 4,58765 µm oder 4,74515 µm zur Abtastung ausgewählten Absorptionslinie enthält und
- der vierte Wellenlängenbereich die Wellenlänge einer aus den Ammoniak-Absorptionslinien bei 6,1496 µm, 6,4046 µm, 6,4066 µm oder 6,18425 µm zur Abtastung ausgewählten Absorptionslinie enthält,
und wobei das Licht mithilfe der vier durchstimmbaren Laser im Zeitmultiplex erzeugt oder simultan erzeugt und dabei individuell moduliert wird.

Gegenstand der Erfindung ist ferner ein Messsystem zur Bestimmung von Fremdgasen in Ethylen mit einem Reinheitsgrad bis größer als 99%, mit einer Messzelle zur Aufnahme einer Probe des Ethylens, mit vier in Bezug auf die Wellenlänge durchstimmbaren und die Messzelle durchleuchtenden Lasern, mit einer die Laser steuernden Steuereinrichtung, mit einem das Licht der Laser nach Durchleuchten der Probe detektierenden Detektor und mit einer dem Detektor nachgeordneten Auswerteeinrichtung, die die Konzentrationen der Fremdgase anhand ihrer wellenlängenspezifischen Absorption des Lichts bestimmt,
wobei die Laser und die Steuereinrichtung dazu ausgebildet sind, das Licht in vier Wellenlängenbereichen zu erzeugen und durchzustimmen, von denen
- der erste Wellenlängenbereich die Wellenlänge einer aus den Acetylen-Absorptionslinien bei 3,02575 µm, 3,0223 µm, 3,0099 µm oder 7,423 µm ausgewählten Absorptionslinie enthält,
- der zweite Wellenlängenbereich die Wellenlänge einer aus den Kohlendioxid-Absorptionslinien bei 4,2347 µm, 4,2396 µm, 4,23225 µm oder 4,2875 µm ausgewählten Absorptionslinie enthält,
- der dritte Wellenlängenbereich die Wellenlänge einer aus den Kohlenmonoxid-Absorptionslinien bei 4,61 µm, 4,58765 µm oder 4,74515 µm ausgewählten Absorptionslinie enthält und
- der vierte Wellenlängenbereich die Wellenlänge einer aus den Ammoniak-Absorptionslinien bei 6,1496 µm, 6,4046 µm, 6,4066 µm oder 6,18425 µm ausgewählten Absorptionslinie enthält,
wobei die Laser und die Steuereinrichtung ferner dazu ausgebildet sind, das Licht im Zeitmultiplex zu erzeugen oder simultan zu erzeugen und dabei individuell zu modulieren, und wobei die Auswerteeinrichtung dazu ausgebildet ist, die Konzentrationen der Fremdgase Acetylen, Kohlendioxid, Kohlenmonoxid und Ammoniak anhand der Absorptionen bei den ausgewählten Absorptionslinien zu bestimmen.

Die Konzentrationen der gemessenen Fremdgase (Zielgase) Acetylen, Kohlendioxid, Kohlenmonoxid und Ammoniak sind für die Qualität und weitere Nutzbarkeit von Ethylen entscheidend. Die erwarteten Konzentrationen dieser Zielgase liegen im Bereich von 0 bis 10 ppm, wobei jedoch ihre Messung in einer ausreichenden spektralen Auflösung durch die starke Absorption von Ethylen und durch andere Fremdgase wie Wasser, Wasserstoff, Methan und Ethan erschwert wird. Die gemäß der Erfindung für die Konzentrationsbestimmung der genannten Zielgase verwendeten Absorptionslinien haben den Vorteil, dass sie nicht bis nur sehr wenig von dem Produktgas Ethylen oder untereinander beeinflusst werden, und somit eine genaue Messung mit einer Nachweisgrenze bis zu 10 ppb ermöglichen.

Da derzeit noch keine Einzellichtquellen verfügbar sind, deren Durchstimmbereich groß genug ist, um die jeweils ausgewählten Absorptionslinien der verschiedenen Zielgase gleichzeitig wellenlängenabhängig abzutasten, wird das Licht zum Durchleuchten der Probe mittels einer Lichtquelle erzeugt, die mehrere Einzellichtquellen umfasst. Als Einzellichtquellen kommen Halbleiterlaser in Betracht, wobei vorzugsweise Quantenkaskadenlaser (Quantum Cascade Laser - QCL), Interbandkaskadenlaser (Interband Cascade Laser - ICL) oder oberflächenemittierende Lasers mit vertikalem Resonator (Vertical Cavity Surface Emitting Laser - VCSEL) verwendet werden. Die Laser können als separate Lasermodule oder in Form eines Arrays auf einem Substrat realisiert werden. Das von den unterschiedlichen Lasern erzeugte Licht kann mittels eines Strahlkombinierers (z. B. Faserkoppler, teildurchlässiger Spiegel, Kollimatoroptik, refraktive, diffraktive oder dispersive Elemente wie z. B. Prisma oder Gitter) in die Probe eingekoppelt werden, um nach deren durchstrahlen auf den Detektor zu treffen. Die Laser können nacheinander im Zeitmultiplex und/oder zur individuellen Modulation des von ihnen erzeugten Lichts angesteuert werden, so dass das detektierte Licht nach den einzelnen Lasern getrennt ausgewertet werden kann.

Entsprechend einer vorteilhaften Weiterbildung des erfindungsgemäßen Verfahrens vorteilhafter Weise werden zusätzlich zu den Konzentrationen von Acetylen, Kohlendioxid, Kohlenmonoxid und Ammoniak auch Konzentrationen der weiteren Fremdgase Methan und/oder Ethan anhand der Absorption bei jeweils einer ihrer folgenden Absorptionslinien bestimmt:
- Methan-Absorptionslinien bei 3,53571 µm, 3,53595 µm oder 3,58134 µm.
- Ethan-Absorptionslinien bei 6,40545 µm, 6,40574 µm, 6,40646 µm, 6,40707 µm, 6,40737 µm, 6,40782 µm, 6,4082 µm oder 6,40962 µm.

Jede der genannten Ethan-Absorptionslinien kann wegen ihrer Nachbarschaft zu den oben angegebenen Ammoniak-Absorptionslinien bei 6,4046 µm oder 6,4066 µm gemeinsam mit der einen oder anderen dieser beiden Ammoniak-Absorptionslinien wellenlängenabhängig abgetastet werden, so dass für die Messung von Ethan kein weiterer Laser benötigt wird.

Entsprechendes gilt für die Konzentrationsbestimmung von Wasser anhand der Absorption bei der Wasser-Absorptionslinie bei 6,1854 µm, wobei in diesem Fall die Wasser-Absorptionslinie und die Ammoniak-Absorptionslinie bei 6,18425 µm gemeinsam mit Hilfe nur eines Lasers wellenlängenabhängig abgetastet werden können.

Eine vorteilhafte Weiterbildung des erfindungsgemäßen Verfahrens sieht vor, bei der Bestimmung der Konzentrationen der unterschiedlichen Fremdgase auch die jeweils benachbarten Ethylen-Spektren mit auszuwerten, um die Ethylen-Konzentration und damit die Ausbeute des Herstellungsprozesses von Ethylen in der jeweils überwachten Stufe zu bestimmen. Im Einzelnen können dazu folgende Ethylen-Absorptionslinien zusammen mit den Absorptionslinien der Fremdgase abgetastet werden:
- Ethylen-Absorptionslinien bei 3,02529 µm, 3,02556 µm, 3,02559 µm, 3,0258 µm oder 3,02588 µm in Nachbarschaft zu der Acetylen-Absorptionslinie bei 3,02575 µm;
- Ethylen-Absorptionslinien bei 3,02217 µm, 3,02229 µm, 3,02235 µm, 3,02249 µm oder 3,02265 µm in Nachbarschaft zu der Acetylen-Absorptionslinie bei 3,0223 µm;
- Ethylen-Absorptionslinien bei 3,00919 µm, 3,00937 µm, 3,00947 µm, 3,0096 µm, 3,00979 µm, 3,00993 µm oder 3,00999 µm in Nachbarschaft zu der Acetylen-Absorptionslinie bei 3,0099 µm;
- Ethylen-Absorptionslinien bei 7,42398 µm, 7,42435 µm oder 7,42483 µm in Nachbarschaft zu der Acetylen-Absorptionslinie bei 7,423 µm;
- Ethylen-Absorptionslinien bei 4,2343 µm, 4,2345 µm oder 4,2348 µm in Nachbarschaft zu der Kohlendioxid-Absorptionslinie bei 4,2347 µm;
- Ethylen-Absorptionslinien bei 4,2393 µm, 4,2394 µm oder 4,2397 µm in Nachbarschaft zu der Kohlendioxid-Absorptionslinie bei 4,2396 µm;
- Ethylen-Absorptionslinien bei 4,23168 µm, 4,23195 µm, 4,2322 µm, 4,2323 µm oder 4,2328 µm in Nachbarschaft zu der Kohlendioxid-Absorptionslinie bei 4,23225 µm;
- Ethylen-Absorptionslinien bei 4,2874 µm, 4,2876 µm, 4,2877 µm oder 4,2878 µm in Nachbarschaft zu der Kohlendioxid-Absorptionslinie bei 4,2875 µm;
- Ethylen-Absorptionslinien bei 4,6096 µm, 4,6097 µm, 4,6098 µm oder 4,6099 µm in Nachbarschaft zu der Kohlenmonoxid-Absorptionslinie bei 4,61 µm;
- Ethylen-Absorptionslinien bei 4,5872 µm, 4,5873 µm, 4,5875 µm, 4,5877 µm, 4,5878 µm oder 4,5879 µm in Nachbarschaft zu der Kohlenmonoxid-Absorptionslinie bei 4,58765 µm;
- Ethylen-Absorptionslinien bei 4,74417 µm, 4,7449 µm, 4,74517 µm, 4,74527 µm oder 4,74537 µm in Nachbarschaft zu der Kohlenmonoxid-Absorptionslinie bei 4,74515 µm;
- Ethylen-Absorptionslinien bei 6,1483 µm, 6,1484 µm, 6,14912 µm, 6,14965 µm, 6,14979 µm, 6,14996 µm oder 6,15022 µm in Nachbarschaft zu der Ammoniak-Absorptionslinie bei 6,1496 µm;
- Ethylen-Absorptionslinien bei 6,40146 µm, 6,40156 µm, 6,40471 µm, 6,40594 µm oder 6,40651 µm in Nachbarschaft zu der Ammoniak-Absorptionslinie bei 6,4046 µm oder 6,4066 µm;
- Ethylen-Absorptionslinien bei 6,181 µm, 6,182 µm, 6,1838 µm, 6,1841 µm, 6,1844 pm, 6,1866 µm, 6,1881 µm, 6,1883 µm oder 6,1892 µm in Nachbarschaft zu der Ammoniak-Absorptionslinie bei 6,18425 µm;
- Ethylen-Absorptionslinien bei 3,53569 µm, 3,53577 µm oder 3,53599 µm in Nachbarschaft zu der Methan-Absorptionslinie bei 3,53571 µm oder 3,53595 µm;
- Ethylen-Absorptionslinien bei 3,58107 µm, 3,58113 µm, 3,58115 µm, 3,58119 µm, 3,58129 µm, 3,58142 µm, 3,58145 µm oder 3,58158 µm in Nachbarschaft zu der Methan-Absorptionslinie bei 3,58134 µm;
- Ethylen-Absorptionslinien bei 6,40594 µm, 6,40651 µm, 6,40681 µm, 6,40906 µm oder 6,40922 µm in Nachbarschaft zu der Ethan-Absorptionslinie bei 6,40545 µm, 6,40574 µm, 6,40646 µm, 6,40707 µm, 6,40737 µm, 6,40782 µm, 6,4082 µm oder 6,40962 µm.

In dem zuletzt genannten Wellenlängenfenster von 6,4 µm bis 6,41 µm liegen auch die oben bereits genannten Ammoniak-Absorptionslinien bei 6,4046 µm und 6,4066 µm, so dass die simultane Messung von Ammoniak, Ethan und Ethylen mit nur einem Laser möglich ist.

Die spektrale Messung erfolgt in einer Messzelle, in der eine Probe des Ethylens vorzugsweise auf einem reduzierten Druck im Bereich zwischen 10 mbar und 200 mbar, vorzugsweise kleiner als 100 mbar und besonders vorzugsweise im Bereich zwischen 10 mbar und 30 mbar gehalten wird, um die Breite der Absorptionslinien zu verkleinern und damit die gewünschte spektrale Auflösung zu erhalten. Insbesondere führt die Verringerung der Linienbreiten des mit einer Konzentration von über 99 % vorliegenden Ethylens dazu, dass Messfenster für die zu messenden Zielgase geöffnet werden. Die Messung der Zielgase erfolgt extraktiv, indem die Probe kontinuierlich oder diskontinuierlich aus dem Herstellungsprozess des Ethylens entnommen und der Messzelle zugeführt wird. Dabei wird der Druck des Gases von dem ursprünglichen Prozessdruck (typischerweise 35 bar) auf den gewünschten Messdruck verringert.

Die Messung erfolgt vorzugsweise in einem Temperaturbereich von etwa 15 °C bis 50 °C. In diesem Temperaturbereich liegt auch die Prozesstemperatur. Um die gewünschte Nachweisgrenze und Genauigkeit von 10 ppb zu erreichen, ist es von Vorteil, die Messtemperatur zu kennen oder zu messen, um sie bei der rechnerischen Ermittlung der Konzentrationen der Zielgase (Fremdgase) aus den detektierten wellenlängenspezifischen Absorptionen zu berücksichtigen, oder die Messtemperatur beispielsweise durch Regelung konstant zu halten.

Um eine hohe Messempfindlichkeit und die angestrebte Nachweisgrenze zu erreichen, kann eine Multipass-Messzelle mit mehrfach gefalteten Strahlengang verwendet werden, wobei die Länge des Strahlengangs zwischen 5 m und 100 m, vorzugsweise um oder größer 10 m, beträgt.

Die Messung kann nach dem Verfahren der direkten Absorptionsspektroskopie oder der Wellenlängen-Modulationsspektroskopie (WMS) erfolgen, wobei beide Verfahren auch miteinander kombiniert werden können, so wie dies beispielsweise aus der DE 10 2012 223 874 B3 bekannt ist. In beiden Fällen wird die Wellenlänge des erzeugten Lichts periodisch über die jeweils interessierenden Absorptionslinien der Zielgase variiert und die nach Durchleuchten der Probe detektierte Intensität des Lichts wellenlängenabhängig ausgewertet. Im Falle der WMS wird die Wellenlänge zusätzlich mit hoher Frequenz und kleiner Amplitude sinusförmig moduliert und die detektierte Lichtintensität bei einer höheren Harmonischen der Modulationsfrequenz, beispielsweise der zweiten Harmonischen, ausgewertet. Zur Verbesserung des Signal-Rausch-Verhältnisses kann die detektierte Lichtintensität zusätzlich bei der Modulationsfrequenz und/oder bei weiteren höheren Harmonischen ausgewertet werden.

Die Erfindung wird im Folgenden beispielhaft anhand der Zeichnungen näher erläutert. Es zeigen schematisch und nicht maßstäblich:
- Figur 1: ein Messsystem zur Bestimmung von Fremdgasen in Ethylen und die
- Figuren 2 bis 32: Absorptionsspektren in Bereichen von für die Messung ausgewählter Absorptionslinien der Fremdgase.

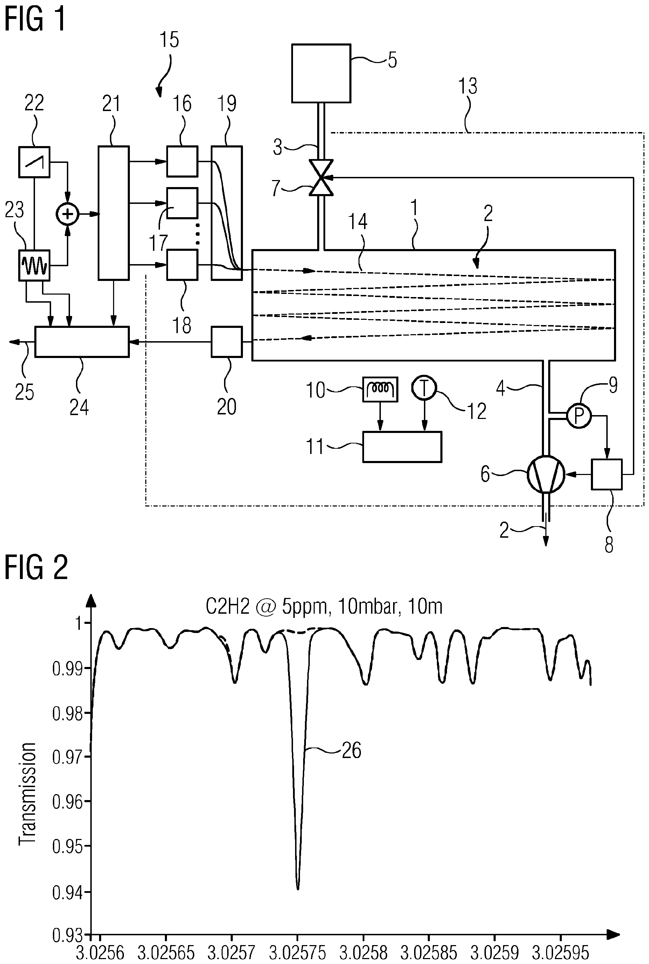

Figur 1 zeigt in sehr vereinfachter schematischer Darstellung ein Messsystem mit einer Messzelle 1 zur Aufnahme einer zu analysierenden Gasprobe 2, die über eine erste Gasleitung 3 in die Messzelle 1 eingeleitet und über eine zweite Gasleitung 4 aus der Messzelle 1 heraus geleitet wird. Die erste Gasleitung 3 führt von der Messzelle 1 zu einer Entnahmestelle, z. B. einem Probenahmesystem mit Bypass (Fast Loop), in einen Herstellungsprozess 5 von Ethylen. Der Herstellungsprozess 5 umfasst einen mehrstufigen Destillationsprozess, in dem zuvor durch Steamcracking erhaltene Crackgase in ihre Einzelbestandteile aufgeteilt werden, bis reine Produktgase, darunter Ethylen, vorliegen. In den verschiedenen Destillationsstufen liegen die Produktgase zusammen mit Fremdgasen in unterschiedlichen Konzentrationen vor, wobei in jeder höheren Stufe die Konzentration des Produktgases höher und die Konzentrationen der Fremdgase geringer ist, als in der darunter liegenden Stufe. Die jeweils letzte Stufe enthält das hochreine Produktgas, z. B. Ethylen mit einem Reinheitsgrad von über 99%, und nur noch Spuren der Fremdgase. Zur Überprüfung oder Überwachung der Reinheit des Ethylens sollen mittels des Messsystems die Fremdgase Acetylen, Kohlendioxid, Kohlenmonoxid und Ammoniak nachgewiesen und ihre Konzentrationen bestimmt werden. Um die Destillation optimal zu kontrollieren, ist es von Vorteil, nicht nur die letzte Destillationsstufe sondern auch davorliegende oder alle Stufen mit identischen Messsystemen auszustatten.

Die aus dem Herstellungsprozess 5 entnommene Ethylen-Probe 2 wird mittels einer Pumpe 6 in der zweiten Gasleitung 4 angesaugt, wobei in Zusammenwirken mit einer Drossel oder einem Ventil 7 in der ersten Gasleitung 3 der Gasdruck in der Messzelle 1 auf etwa 10 mbar reduziert wird. Die Ethylen-Probe 2 kann dem Prozess 5 kontinuierlich oder diskontinuierlich entnommen werden. Die Pumpe 6 und ggf. das Ventil 7 werden von einer Steuereinrichtung 8 in Abhängigkeit von dem mit einem Druckmessaufnehmer 9 erfassten Unterdruck in der Messzelle 1 gesteuert oder geregelt, um den Gasdruck in der Messzelle 1 während der Messung konstant zu halten.

Um die Messtemperatur konstant zu halten, kann die Messkammer 1 mittels eines Heizelements 10 oder ggf. eines Kühlelements temperiert werden. Die Temperierung erfolgt durch einen Regler 11 in Abhängigkeit von einer mittels eines Temperatursensors 12 an der Messkammer 1 erfassten Temperatur. Als Heizelement eignet sich auch ein Transistor, der gleichzeitig als Heizelement und Temperaturfühler dient, so dass keine aufwendige Regelung zur Konstanthaltung der Temperatur erforderlich ist. Zur Konstanthaltung der Messtemperatur kann die Messkammer alternativ oder ergänzend in einem hier lediglich angedeuteten Behälter 13 aus Dämmstoff wie z. B. Polystyrol-Hartschaum oder expandiertem Polypropylen (EPP) angeordnet sein.

Die Messzelle 1 ist als Multipass-Messzelle, beispielsweise als Herriot-Zelle oder White-Zelle, ausgebildet, die von dem Licht 14 einer wellenlängendurchstimmbaren Lichtquelle 15 durchstrahlt wird. Die Lichtquelle 15 umfasst mindestens vier Einzellichtquellen 16, 17, 18 in Form von durchstimmbaren Halbleiterlasern, deren Licht mittels eines Strahlkombinierers 19, z. B. eines Faserkopplers, in die Messzelle 1 eingeleitet wird. Innerhalb der Messzelle 1 wird das Licht 14 mehrfach reflektiert, bevor es auf einen Detektor 20 fällt, wobei mittels der Mehrfachreflektion eine Absorptionsstrecke in der Größenordnung von 10 m erzielt wird. Die Einzellichtquellen 16, 17, 18 werden über einen Multiplexer 21 nacheinander von einen ersten Signalgenerator 22 periodisch mit einem rampen- oder dreieckförmigen Strom angesteuert, um das von ihnen jeweils erzeugte Licht über vorgegebene Wellenlängenbereiche im mittleren Infrarot-Bereich durchzustimmen, in denen ausgewählte Absorptionslinien der zu bestimmenden Fremdgase (Zielgase) Acetylen, Kohlendioxid, Kohlenmonoxid und Ammoniak liegen. Zum Zwecke der Messung nachdem Prinzip der Wellenlängen-Modulationsspektroskopie (WMS) kann der rampen- oder dreieckförmige Strom gleichzeitig mittels eines zweiten Signalgenerators 23 mit einer vorgegebenen Frequenz f moduliert werden. Die Laser 16, 17, 18 können auch von ihnen individuell zugeordneten Signalgeneratoren angesteuert werden, so dass dann der Multiplexer 21 entfallen kann. Eine dem Detektor 20 nachgeordnete Auswerteeinrichtung 24 wertet die Intensität des Lichts 14 an den Stellen der ausgewählten Absorptionslinien der Zielgase phasensensitiv bei einer oder mehreren höheren Harmonischen der Modulationsfrequenz f, z. B. der zweiten Harmonischen 2f, aus und ermittelt daraus als Analysenergebnis 25 die Konzentrationen der Fremdgase Acetylen, Kohlendioxid, Kohlenmonoxid und Ammoniak in der Ethylen-Probe 2.

Die Konzentrationen der oben genannten Fremd- oder Zielgase werden anhand jeweils einer der folgenden Absorptionslinien ermittelt:

| | |
|---|---|
| Acetylen: | Absorptionslinie bei 3,02575 µm, 3,0223 µm, 3,0099 µm oder 7,423 µm, |
| Kohlendioxid: | Absorptionslinie bei 4,2347 µm, 4,2396 µm, 4,23225 µm oder 4,2875 µm, |
| Kohlenmonoxid: | Absorptionslinie bei 4,61 µm, 4,58765 µm oder 4,74515 µm, |
| Ammoniak: | Absorptionslinie bei 6,1496 µm, 6,4046 µm, 6,4066 µm oder 6,18425 µm. |

Da derzeit keine Einzellichtquellen verfügbar sind, deren Durchstimmbereich groß genug ist, um die jeweils ausgewählten Absorptionslinien der verschiedenen Zielgase Acetylen, Kohlendioxid, Kohlenmonoxid und Ammoniak gleichzeitig wellenlängenabhängig abzutasten, sind vier Laser 16, 17, 18 erforderlich, für die Quantenkaskadenlaser, Interbandkaskadenlaser oder VCSELs in Betracht kommen und die als separate Lasermodule oder in Form eines Arrays auf einem Substrat realisiert sein können. VCSELS bis über 3 µm sind bereits technisch herstellbar und können daher für die Messung von Acetylen verwendet werden. Die Laser 16, 17, 18 können, wie im Beispiel von Fig. 1 gezeigt, im Multiplex-Verfahren angesteuert werden. Es ist aber auch möglich, sie simultan anzusteuern und dabei mit unterschiedlichen Frequenzen f₁₆, f₁₇, f₁₈ zu modulieren, wobei das detektierte Licht 14 zur Unterscheidung der Absorptionen durch die verschiedenen Zielgase bei den Harmonischen nf₁₆, nf₁₇, nf₁₈ (n ≥ 1) der Modulationsfrequenzen ausgewertet wird.

Die folgenden Figuren 2 bis 15 zeigen beispielhaft das Absorptionsspektrum der Ethylen-Probe 2 in den Bereichen der oben genannten Absorptionslinien der Zielgase ("target gas") Acetylen, Kohlendioxid, Kohlenmonoxid und Ammoniak in Gegenwart folgender Gasmatrix "perturber gas"):

| | |
|---|---|
| Wasser: | < 2ppm |
| Wasserstoff: | Spuren |
| Methan: | 50-200 ppm |
| Ethan: | 300 ppm |
| Ethylen: | 99% |

Figur 2 zeigt das Absorptionsspektrum der Gasprobe 2 im Bereich der Acetylen-Absorptionslinie 26 bei 3,02575 µm.

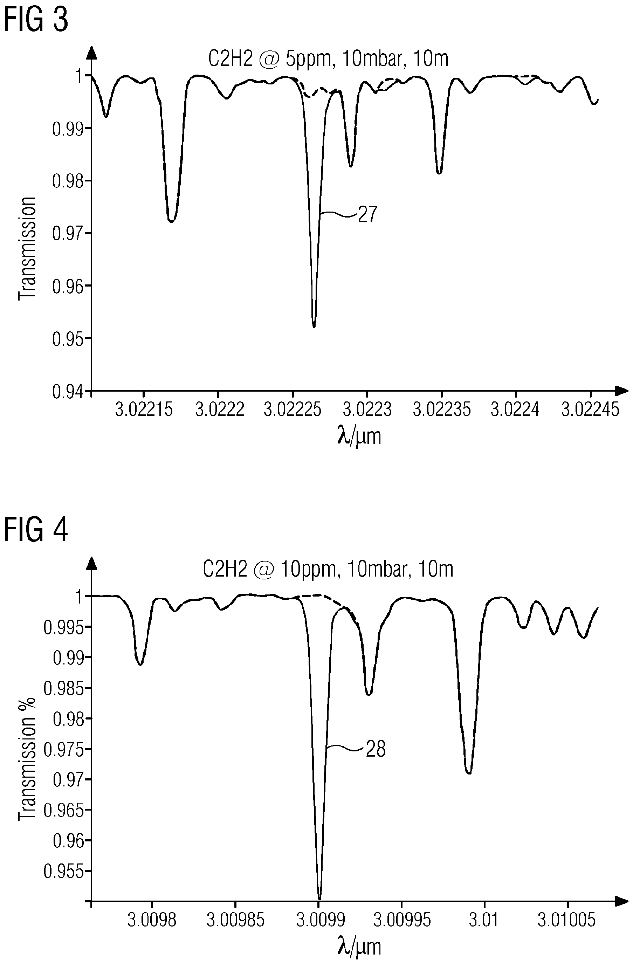

Figur 3 zeigt das Absorptionsspektrum der Gasprobe 2 im Bereich der Acetylen-Absorptionslinie 27 bei 3,0223 µm.

Figur 4 zeigt das Absorptionsspektrum der Gasprobe 2 im Bereich der Acetylen-Absorptionslinie 28 bei 3,0099 µm.

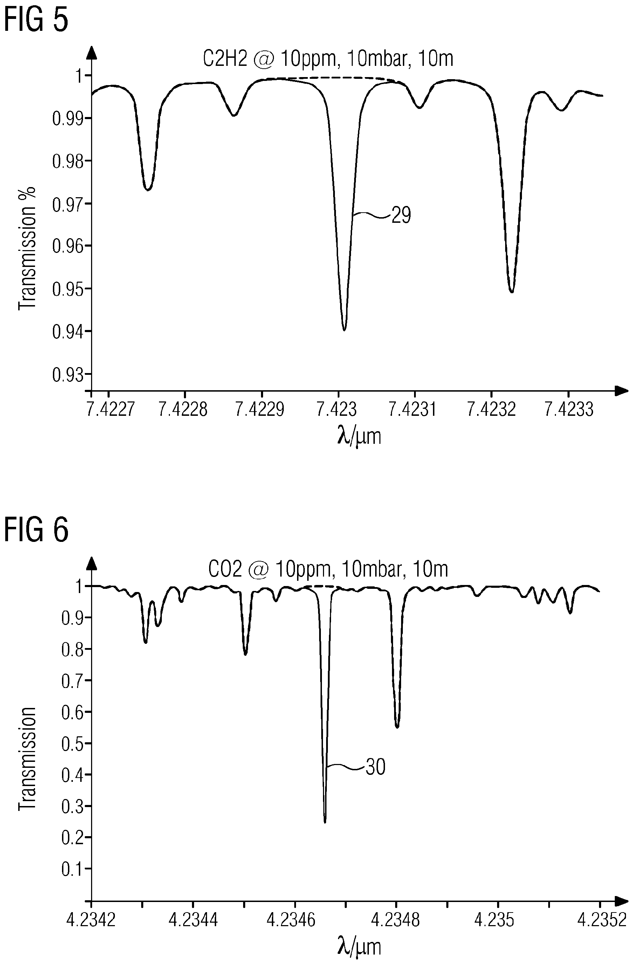

Figur 5 zeigt das Absorptionsspektrum der Gasprobe 2 im Bereich der Acetylen-Absorptionslinie 29 bei 7,423 µm.

Figur 6 zeigt das Absorptionsspektrum der Gasprobe 2 im Bereich der Kohlendioxid-Absorptionslinie 30 bei 4,2347 µm.

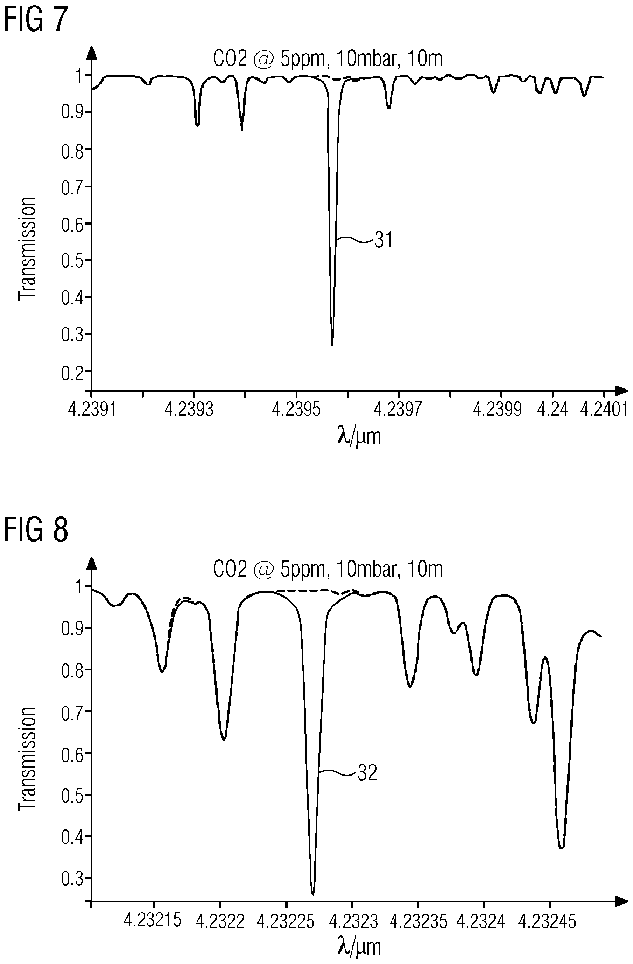

Figur 7 zeigt das Absorptionsspektrum der Gasprobe 2 im Bereich der Kohlendioxid-Absorptionslinie 31 bei 4,2396 µm.

Figur 8 zeigt das Absorptionsspektrum der Gasprobe 2 im Bereich der Kohlendioxid-Absorptionslinie 32 bei 4,23225 µm.

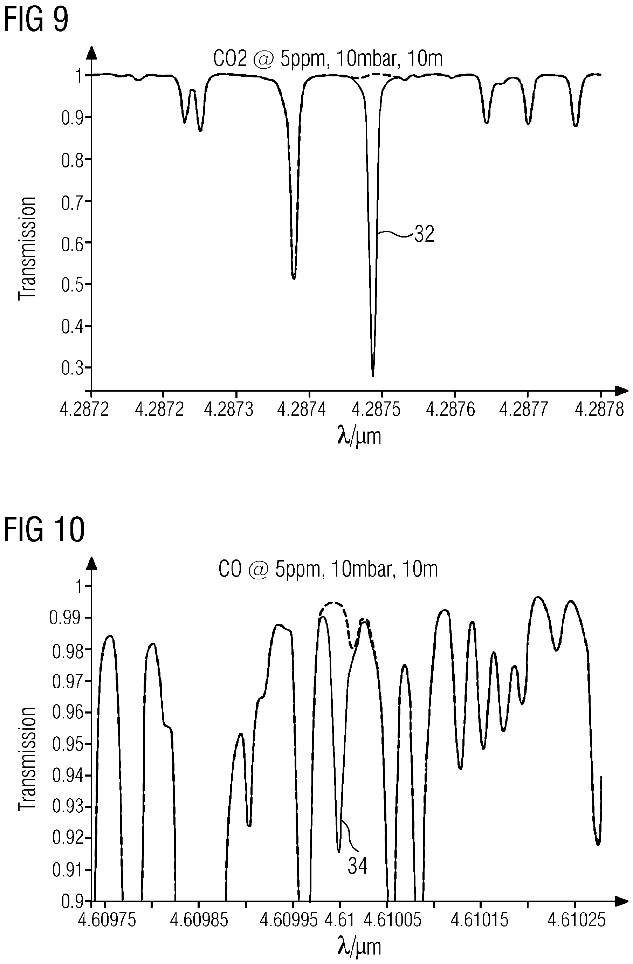

Figur 9 zeigt das Absorptionsspektrum der Gasprobe 2 im Bereich der Kohlendioxid-Absorptionslinie 33 bei 4,2875 µm.

Figur 10 zeigt das Absorptionsspektrum der Gasprobe 2 im Bereich der Kohlenmonoxid-Absorptionslinie 34 bei 4,61 µm.

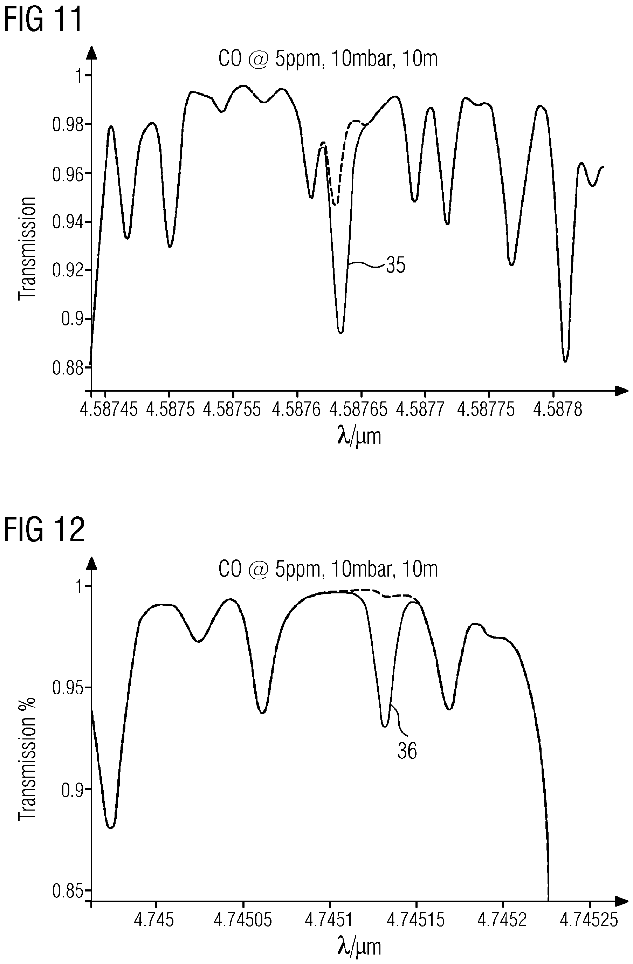

Figur 11 zeigt das Absorptionsspektrum der Gasprobe 2 im Bereich der Kohlenmonoxid-Absorptionslinie 35 bei 4,58765 µm.

Figur 12 zeigt das Absorptionsspektrum der Gasprobe 2 im Bereich der Kohlenmonoxid-Absorptionslinie 36 bei 4,74515 µm.

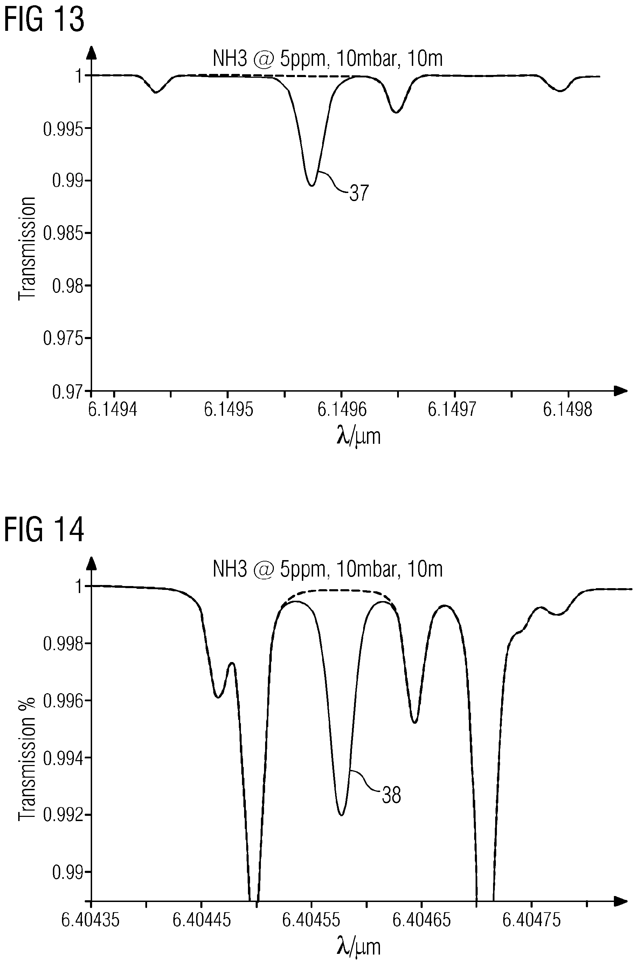

Figur 13 zeigt das Absorptionsspektrum der Gasprobe 2 im Bereich der Ammoniak-Absorptionslinie 37 bei 6,1496 µm.

Figur 14 zeigt das Absorptionsspektrum der Gasprobe 2 im Bereich der Ammoniak-Absorptionslinie 38 bei 6,4046 µm.

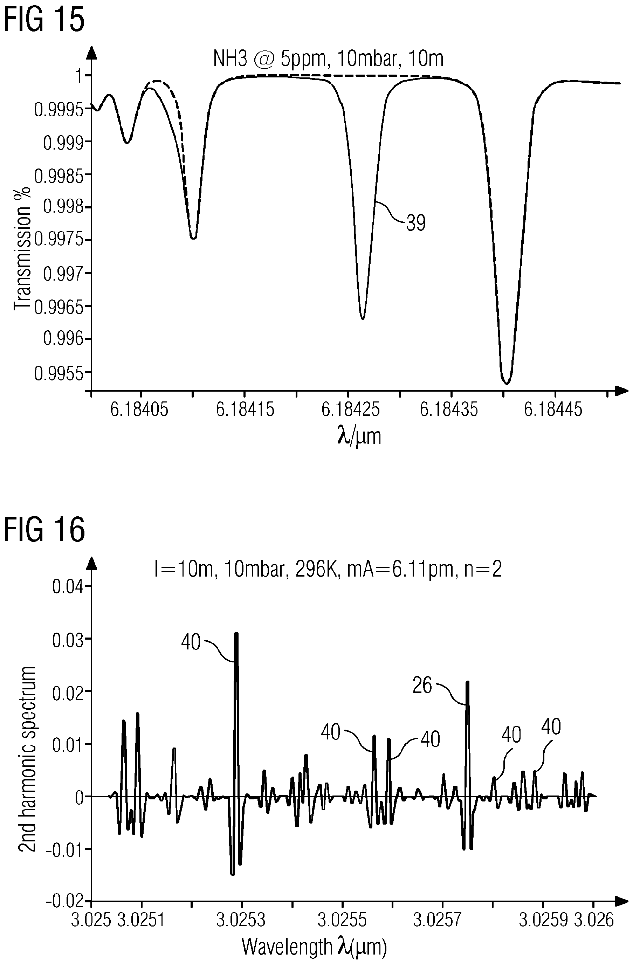

Figur 15 zeigt das Absorptionsspektrum der Gasprobe 2 im Bereich der Ammoniak-Absorptionslinie 39 bei 6,18425 µm.

Die gezeigten Absorptionslinien 26-39 der Zielgase haben den Vorteil, dass sie nicht bis nur sehr wenig von dem Produktgas Ethylen oder untereinander beeinflusst werden, und somit eine genaue Messung der Zielgase mit einer Nachweisgrenze bis zu 10 ppb ermöglichen.

Wie die folgenden Figuren 16 bis 29 zeigen, kann zusammen mit den Zielgasen Acetylen, Kohlendioxid, Kohlenmonoxid und Ammoniak auch die Konzentration von Ethylen bestimmt werden, ohne dass dazu ein zusätzlicher Laser erforderlich ist. Dazu wird mindestens eine der für die Messung verwendeten Zielgas-Absorptionslinien gemeinsam mit mindestens einer sich in Nachbarschaft zu ihr befindenden Ethylen-Absorptionslinie wellenlängenabhängig abgetastet. Werden mehrere Ethylen-Absorptionslinien für die Bestimmung der Ethylen-Konzentration herangezogen, so erhöht dies die Robustheit der Messung.

Figur 16 zeigt das WMS-2f-Absorptionsspektrum der Gasprobe 2 im Bereich von 3,025 µm bis 3,026 µm mit der Acetylen-Absorptionslinie 26 bei 3,02575 µm und Ethylen-Absorptionslinien 40 bei 3,02529 µm, 3,02556 µm, 3,02559 µm, 3,0258 µm und 3,02588 µm.

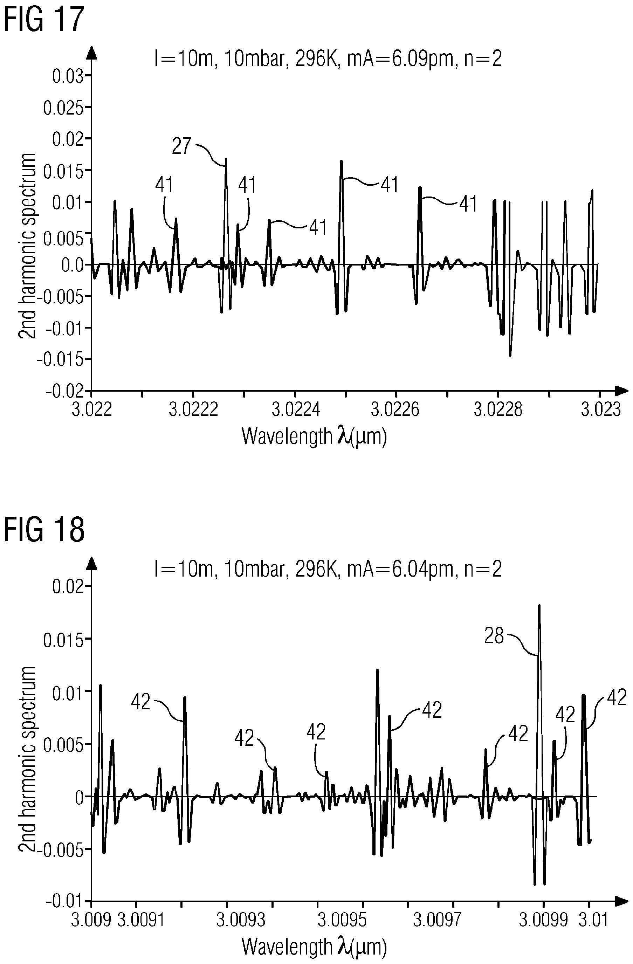

Figur 17 zeigt das WMS-2f-Absorptionsspektrum der Gasprobe 2 im Bereich von 3,022 µm bis 3,023 µm mit der Acetylen-Absorptionslinie 27 bei 3,0223 µm und Ethylen-Absorptionslinien 41 bei 3,02217 µm, 3,02229 µm, 3,02235 µm, 3,02249 µm und 3,02265 µm.

Figur 18 zeigt das WMS-2f-Absorptionsspektrum der Gasprobe 2 im Bereich von 3,009 µm bis 3,01 µm mit der Acetylen-Absorptionslinie 28 bei 3,0099 µm und Ethylen-Absorptionslinien 42 bei 3,00919 µm, 3,00937 µm, 3,00947 µm, 3,0096 µm, 3,00979 µm, 3,00993 µm und 3,00999 µm.

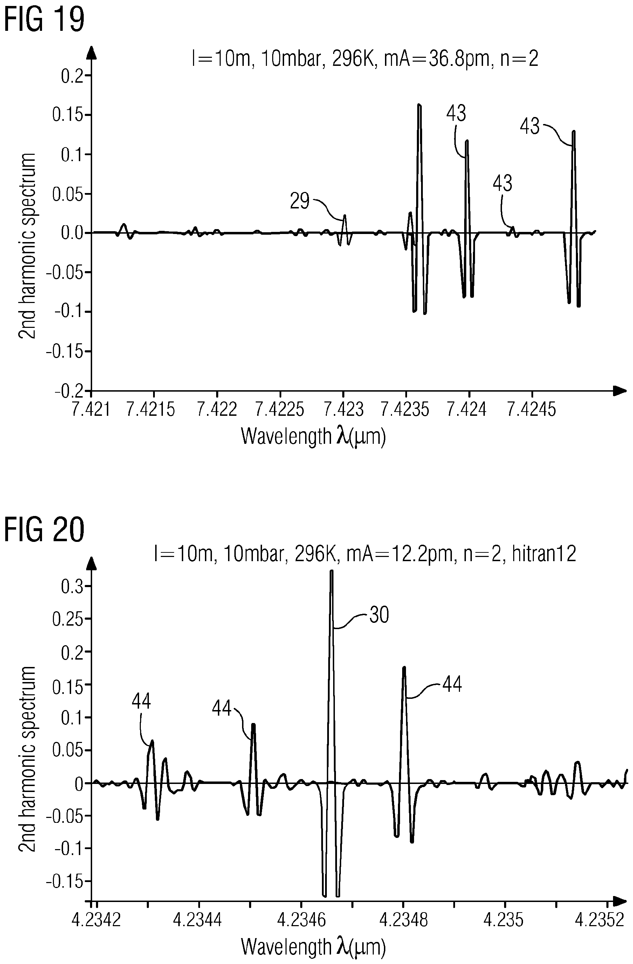

Figur 19 zeigt das WMS-2f-Absorptionsspektrum der Gasprobe 2 im Bereich von 7,421 µm bis 7,425 µm mit der Acetylen-Absorptionslinie 29 bei 7,423 µm und Ethylen-Absorptionslinien 43 bei 7,42398 µm, 7,42435 µm und 7,42483 µm.

Figur 20 zeigt das WMS-2f-Absorptionsspektrum der Gasprobe 2 im Bereich von 4,234 µm bis 4,235 µm mit der Kohlendioxid-Absorptionslinie 30 bei 4,2347 µm und Ethylen-Absorptionslinien 44 bei 4,2343 µm, 4,2345 µm und 4,2348 µm.

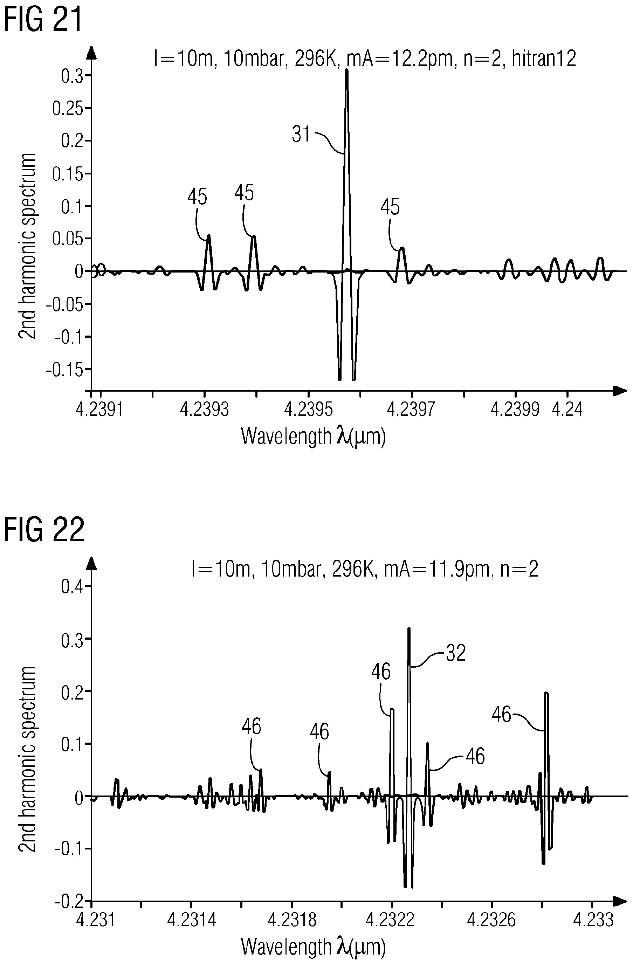

Figur 21 zeigt das WMS-2f-Absorptionsspektrum der Gasprobe 2 im Bereich von 4,239 µm bis 4,24 µm mit der Kohlendioxid-Absorptionslinie 31 bei 4,2396 µm und Ethylen-Absorptionslinien 45 bei 4,2393 µm, 4,2394 µm und 4,2397 µm.

Figur 22 zeigt das WMS-2f-Absorptionsspektrum der Gasprobe 2 im Bereich von 4,231 µm bis 4,232 µm mit der Kohlendioxid-Absorptionslinie 32 bei 4,23225 µm und Ethylen-Absorptionslinien 46 bei 4,23168 µm, 4,23195 µm, 4,2322 µm, 4,2323 µm und 4,2328 µm.

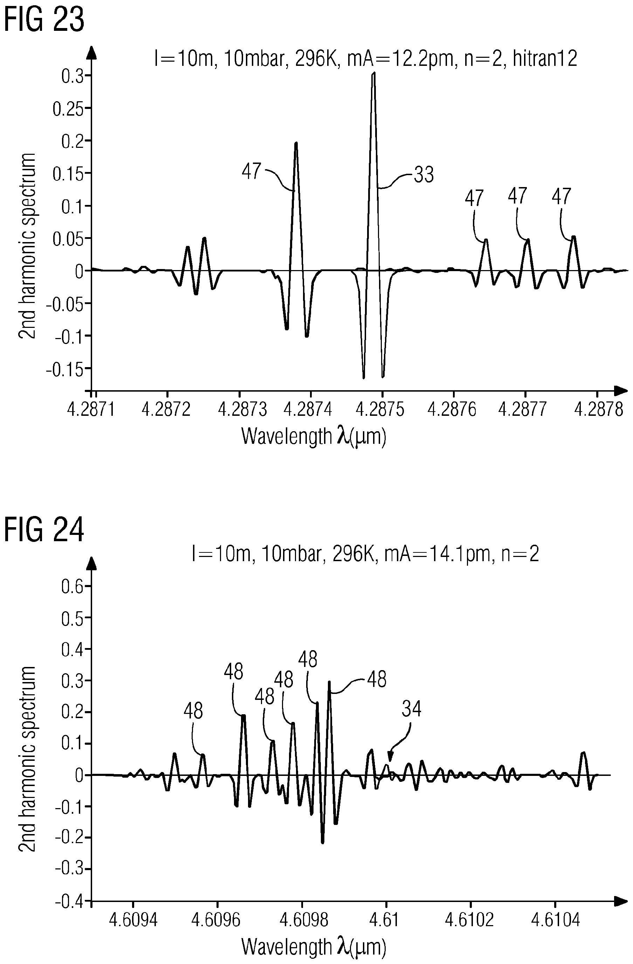

Figur 23 zeigt das WMS-2f-Absorptionsspektrum der Gasprobe 2 im Bereich von 4,287 µm bis 4,288 µm mit der Kohlendioxid-Absorptionslinie 33 bei 4,2875 µm und Ethylen-Absorptionslinien 47 bei 4,2874 µm, 4,2876 µm (4,28764 µm), 4,2877 µm und 4,2878 µm (4,28777 µm).

Figur 24 zeigt das WMS-2f-Absorptionsspektrum der Gasprobe 2 im Bereich von 4,6093 µm bis 4,6105 µm mit der Kohlenmonoxid-Absorptionslinie 34 bei 4,61 µm und Ethylen-Absorptionslinien 48 bei 4,6096 µm (4,60956 µm), 4,6097 µm (4,60966 µm, 4,60973 µm), 4,6098 µm (4,60978 µm, 4,60984 µm) und 4,6099 µm (4,60986 µm).

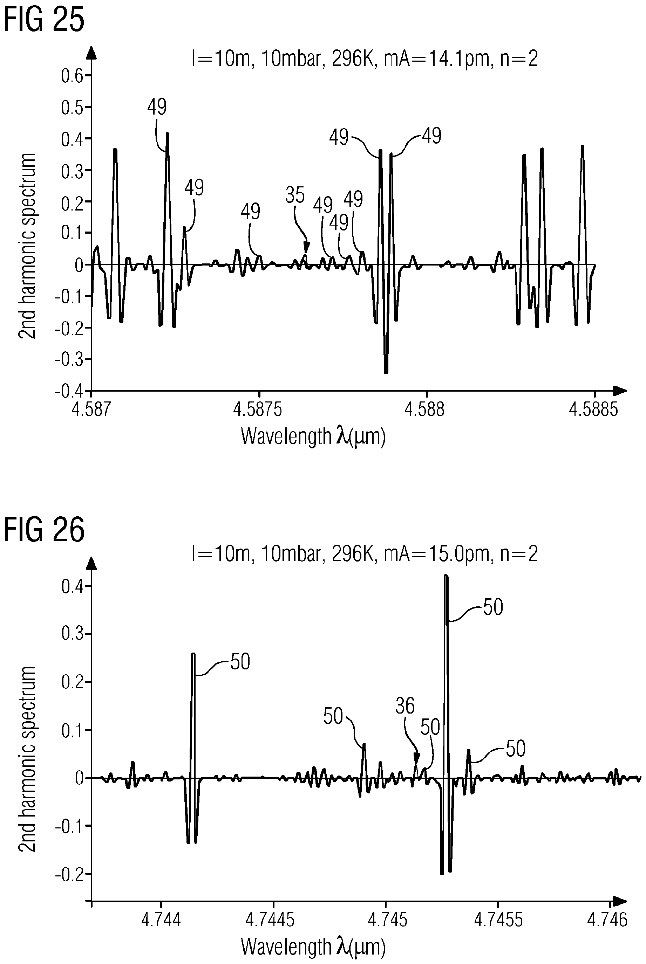

Figur 25 zeigt das WMS-2f-Absorptionsspektrum der Gasprobe 2 im Bereich von 4,587 µm bis 4,5885 µm mit der Kohlenmonoxid-Absorptionslinie 35 bei 4,58765 µm und Ethylen-Absorptionslinien 49 bei 4,5872 µm, 4,5873 µm, 4,5875 µm, 4,5877 µm, 4,5878 µm (4,58777 µm, 4,58781 µm) und 4,5879 µm (4,58786 µm, 4,58789 µm).

Figur 26 zeigt das WMS-2f-Absorptionsspektrum der Gasprobe 2 im Bereich von 4,744 µm bis 4,7455 µm mit der Kohlenmonoxid-Absorptionslinie 36 bei 4,74515 µm und Ethylen-Absorptionslinien 50 bei 4,74417 µm, 4,7449 µm, 4,74517 µm, 4,74527 µm und 4,74537 µm.

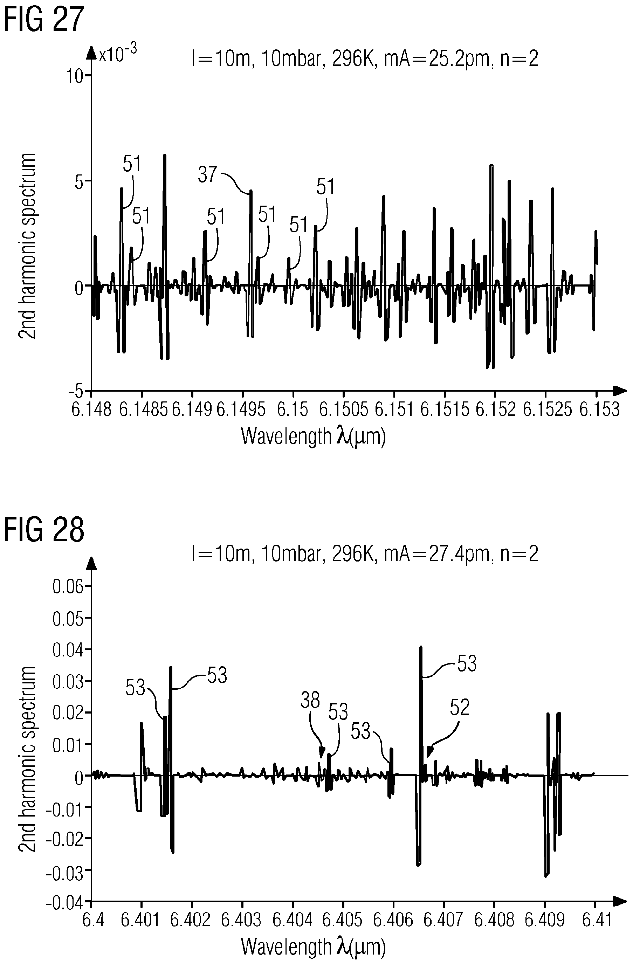

Figur 27 zeigt das WMS-2f-Absorptionsspektrum der Gasprobe 2 im Bereich von 6,1475 µm bis 6,155 µm mit der Ammoniak-Absorptionslinie 37 bei 6,1496 µm und Ethylen-Absorptionslinien 51 bei 6,1483 µm, 6,1484 µm, 6,14912 µm, 6,14965 µm, 6,14979 µm, 6,14996 µm und 6,15022 µm.

Figur 28 zeigt das WMS-2f-Absorptionsspektrum der Gasprobe 2 im Bereich von 6,4 µm bis 6,41 µm mit der Ammoniak-Absorptionslinie 38 bei 6,4046 µm, der alternativ verwendbaren Ammoniak-Absorptionslinie 52 bei 6,4066 µm und Ethylen-Absorptionslinien 53 bei 6,40146 µm, 6,40156 µm, 6,40471 µm, 6,40594 µm oder 6,40651 µm.

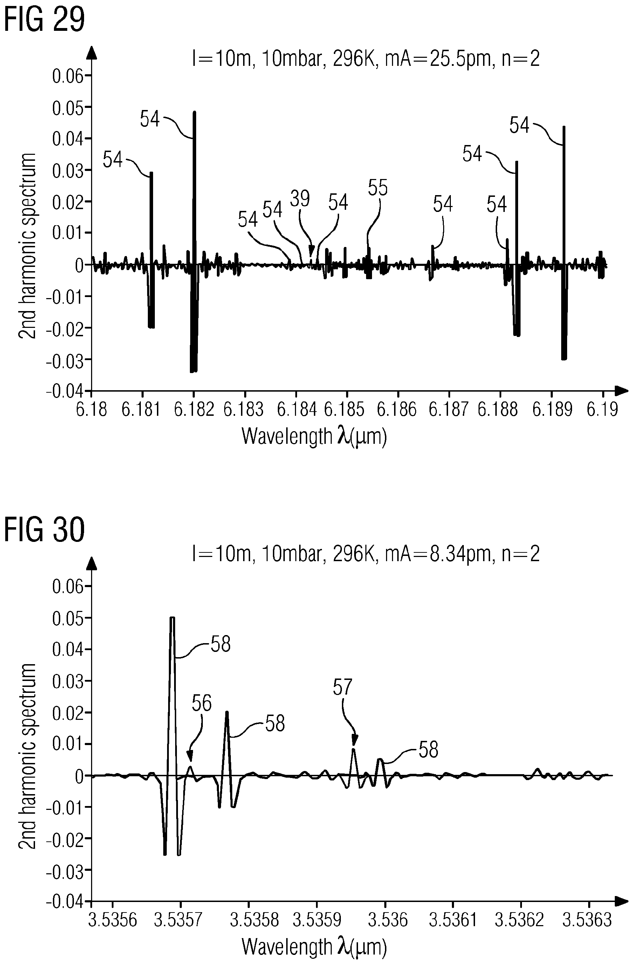

Figur 29 zeigt das WMS-2f-Absorptionsspektrum der Gasprobe 2 im Bereich von 6,18 µm bis 6,19 µm mit der Ammoniak-Absorptionslinie 39 bei 6,18425 µm und Ethylen-Absorptionslinien 54 bei 6,181 µm, 6,182 µm, 6,1838 µm, 6,1841 µm, 6,1844 µm, 6,1866 µm, 6,1881 µm, 6,1883 µm, und 6,1892 µm. In diesem Wellenlängenbereich liegt außerdem eine Wasser-Absorptionslinie 55 bei 6,1854 µm, die eine Konzentrationsbestimmung von Wasser in einem Messbereich von 100 ppb bis 1000 ppm mit 100 ppb Auflösung ermöglicht.

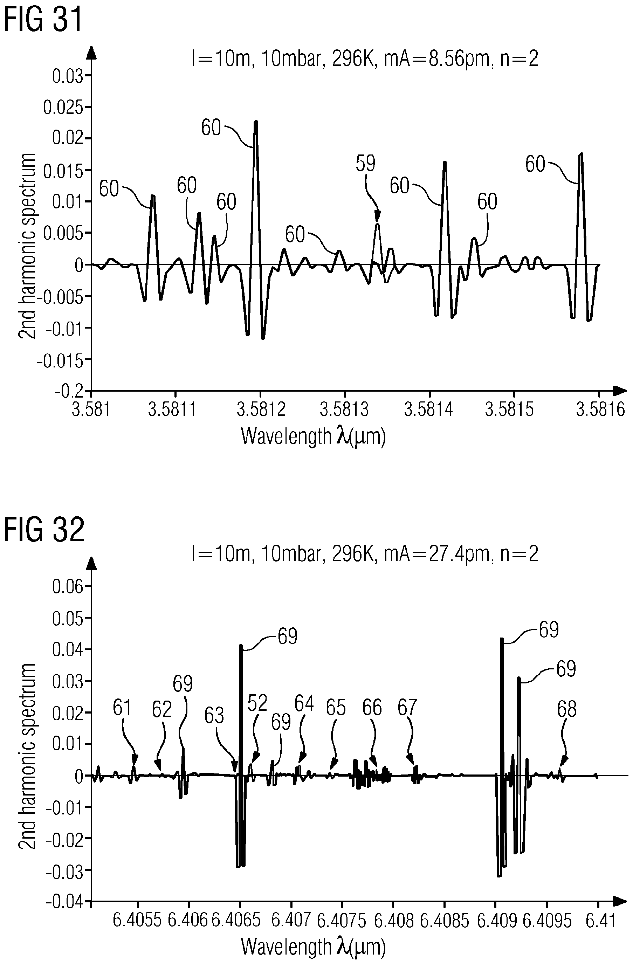

Wie die Figuren 30 und 31 zeigen, kann zusätzlich zu den Konzentrationen von Acetylen, Kohlendioxid, Kohlenmonoxid und Ammoniak mittels eines weiteren Lasers mit einem Durchstimmbereich von etwa 3,5356 µm bis 3,5363 µm oder 3,581 µm bis 3,5817 µm die Konzentration der von Methan, ggf. zusammen mit der Konzentration von Ethylen, bestimmt werden.

Figur 30 zeigt das WMS-2f-Absorptionsspektrum der Gasprobe 2 im Bereich von 3,5356 µm bis 3,5363 µm mit zwei Methan-Absorptionslinien 56, 57 bei 3,53571 µm und 3,53595 µm und Ethylen-Absorptionslinien 58 bei 3,53569 pm, 3,53577 µm und 3,53599 µm.

Figur 31 zeigt das WMS-2f-Absorptionsspektrum der Gasprobe 2 im Bereich von 3,581 µm bis 3,5817 µm mit einer Methan-Absorptionslinie 59 bei 3,58134 µm und Ethylen-Absorptionslinien 60 bei 3,58107 µm, 3,58113 µm, 3,58115 µm, 3,58119 µm, 3,58129 µm, 3,58142 µm, 3,58145 µm und 3,58158 µm.

Schließlich kann zusätzlich die Konzentration der von Ethan, bestimmt werden. Figur 32 zeigt das WMS-2f-Absorptionsspektrum der Gasprobe 2 im Bereich von 6,4 µm bis 6,41 µm mit Ethan-Absorptionslinien 61-68 bei 6,40545 µm, 6,40574 µm, 6,40646 µm, 6,40707 µm, 6,40737 µm, 6,40782 µm, 6,4082 µm und 6,40962 µm sowie Ethylen-Absorptionslinien 69 bei 6,40594 µm, 6,40651 µm, 6,40681 µm, 6,40906 µm und 6,40922 µm. In diesem Wellenlängenbereich liegt außerdem die in Figur 28 gezeigte Ammoniak-Absorptionslinie 52 bei 6,4066 µm, so dass die Konzentrationen von Ammoniak, Ethan und Ethylen simultan mit nur einem Laser bestimmt werden können. Gleiches gilt auch für die in Figur 14 gezeigte Ammoniak-Absorptionslinie 38 bei 6,4046 µm, die wegen ihrer Nachbarschaft zu den oben angegebenen Ethan-Absorptionslinien 61-68 und Ethylen-Absorptionslinien 69 gemeinsam mit mindestens einer von diesen wellenlängenabhängig abgetastet werden kann. In beiden Fällen werden z. B. für die Messung von Acetylen, Kohlendioxid, Kohlenmonoxid, Ammoniak, Methan, Ethan und Ethylen (bis > 99%) nur fünf Laser benötigt.

## Patentansprüche

1. Verfahren zur Bestimmung von Fremdgasen in Ethylen mit einem Reinheitsgrad bis größer als 99%, bei dem eine Probe (2) des Ethylens in einer Messzelle (1) mit Licht (14) durchstrahlt wird, die Wellenlänge des Lichts (14) variiert wird, um ausgewählte Absorptionslinien der Fremdgase Acetylen, Kohlendioxid, Kohlenmonoxid und Ammoniak wellenlängenabhängig abzutasten, das Licht nach Durchstrahlen der Probe (2) detektiert wird und die Konzentrationen der Fremdgase anhand der wellenlängenspezifischen Absorption des Lichts (14) an den Stellen der abgetasteten Absorptionslinien bestimmt werden,
- wobei das Licht (14) mithilfe von vier durchstimmbaren Lasern (16, 17, 18) in vier Wellenlängenbereichen erzeugt wird, von denen der erste Wellenlängenbereich die Wellenlänge einer aus den der erste Wellenlängenbereich die Wellenlänge einer aus den Acetylen-Absorptionslinien bei 3,02575 µm, 3,0223 µm, 3,0099 µm oder 7,423 µm zur Abtastung ausgewählten Absorptionslinie enthält,
- der zweite Wellenlängenbereich die Wellenlänge einer aus den Kohlendioxid-Absorptionslinien bei 4,2347 µm, 4,2396 µm, 4,23225 µm oder 4,2875 µm zur Abtastung ausgewählten Absorptionslinie enthält,
- der dritte Wellenlängenbereich die Wellenlänge einer aus den Kohlenmonoxid-Absorptionslinien bei 4,61 µm, 4,58765 µm oder 4,74515 µm zur Abtastung ausgewählten Absorptionslinie enthält und
- der vierte Wellenlängenbereich die Wellenlänge einer aus den Ammoniak-Absorptionslinien bei 6,1496 µm, 6,4046 µm, 6,4066 µm oder 6,18425 µm zur Abtastung ausgewählten Absorptionslinie enthält,
und wobei das Licht (14) mithilfe der vier durchstimmbaren Laser (16, 17, 18) im Zeitmultiplex erzeugt oder simultan erzeugt und dabei individuell moduliert wird.

2. Verfahren nach Anspruch 1, **dadurch gekennzeichnet, dass** mittels eines weiteren Lasers zusätzlich die Konzentration des Fremdgases Methan anhand der Absorption bei einer der folgenden Absorptionslinien bestimmt wird:
- Methan-Absorptionslinien bei 3,53571 µm, 3,53595 µm oder 3,58134 µm.

3. Verfahren nach Anspruch 1 oder 2, **dadurch gekennzeichnet, dass** mittels eines zusätzlichen Lasers zusätzlich die Konzentration des Fremdgases Ethan anhand der Absorption bei einer der folgenden Absorptionslinien bestimmt wird:
- Ethan-Absorptionslinien bei 6,40545 µm, 6,40574 µm, 6,40646 µm, 6,40707 µm, 6,40737 µm, 6,40782 µm, 6,4082 µm oder 6,40962 µm.

4. Verfahren nach Anspruch 1 oder 2, **dadurch gekennzeichnet, dass** mittels eines vier durchstimmbaren Laser (16, 17, 18) zusätzlich die Konzentration des Fremdgases Ethan anhand der Absorption bei einer der folgenden Absorptionslinien bestimmt wird:
- Ethan-Absorptionslinien bei 6,40545 µm, 6,40574 µm, 6,40646 µm, 6,40707 µm, 6,40737 µm, 6,40782 µm, 6,4082 µm oder 6,40962 µm,
wobei die Ethan-Absorptionslinie gemeinsam mit der Ammoniak-Absorptionslinie bei 6,4046 µm oder bei 6,4066 µm wellenlängenabhängig abgetastet wird.

5. Verfahren nach einem der vorangehenden Ansprüche, **dadurch gekennzeichnet, dass** mittels eines zusätzlichen Lasers zusätzlich die Konzentration des Fremdgases Wasser anhand der Absorption bei der Wasser-Absorptionslinie bei 6,1854 µm bestimmt wird.

6. Verfahren nach einem der Ansprüche 1 bis 4, **dadurch gekennzeichnet, dass** mittels eines vier durchstimmbaren Laser (16, 17, 18) zusätzlich die Konzentration des Fremdgases Wasser anhand der Absorption bei der Wasser-Absorptionslinie bei 6, 1854 µm bestimmt wird, wobei die Wasser-Absorptionslinie gemeinsam mit der Ammoniak-Absorptionslinie bei 6,18425 µm wellenlängenabhängig abgetastet wird.

7. Verfahren nach einem der vorangehenden Ansprüche, **dadurch gekennzeichnet, dass** mittels eines vier durchstimmbaren Laser (16, 17, 18) zusätzlich die Konzentration des Ethylens anhand der Absorption bei mindestens einer Ethylen-Absorptionslinie bestimmt wird, die in Nachbarschaft zu mindestens einer der ausgewählten und abgetasteten Absorptionslinien der Fremdgase Acetylen, Kohlendioxid, Kohlenmonoxid und Ammoniak liegt und mit dieser zusammen wellenlängenabhängig abgetastet wird.

8. Verfahren nach Anspruch 7, **dadurch gekennzeichnet, dass** die Konzentration des Ethylens anhand der Absorption bei einer der folgenden Absorptionslinien in Nachbarschaft zu der Acetylen-Absorptionslinie bei 3,02575 µm bestimmt wird:
- Ethylen-Absorptionslinien bei 3,02529 µm, 3,02556 µm, 3,02559 µm, 3,0258 µm oder 3,02588 µm.

9. Verfahren nach Anspruch 7, **dadurch gekennzeichnet, dass** die Konzentration des Ethylens anhand der Absorption bei einer der folgenden Absorptionslinien in Nachbarschaft zu der Acetylen-Absorptionslinie bei 3,0223 µm bestimmt wird:
- Ethylen-Absorptionslinien bei 3,02217 µm, 3,02229 µm, 3,02235 µm, 3,02249 µm oder 3,02265 µm.

10. Verfahren nach einem Anspruch 7, **dadurch gekennzeichnet, dass** die Konzentration des Ethylens anhand der Absorption bei einer der folgenden Absorptionslinien in Nachbarschaft zu der Acetylen-Absorptionslinie bei 3,0099 µm bestimmt wird:
- Ethylen-Absorptionslinien bei 3,00919 µm, 3,00937 µm, 3,00947 µm, 3,0096 µm, 3,00979 µm, 3,00993 µm oder 3,00999 µm.

11. Verfahren nach Anspruch 7, **dadurch gekennzeichnet, dass** die Konzentration des Ethylens anhand der Absorption bei einer der folgenden Absorptionslinien in Nachbarschaft zu der Acetylen-Absorptionslinie bei 7,423 µm bestimmt wird:
- Ethylen-Absorptionslinien bei 7,42398 µm, 7,42435 µm oder 7,42483 µm.

12. Verfahren nach einem der Ansprüche 7 bis 11, **dadurch gekennzeichnet, dass** die Konzentration des Ethylens anhand der Absorption bei einer der folgenden Absorptionslinien in Nachbarschaft zu der Kohlendioxid-Absorptionslinie bei 4,2347 µm bestimmt wird:
- Ethylen-Absorptionslinien bei 4,2343 µm, 4,2345 µm oder 4,2348 µm.

13. Verfahren nach einem der Ansprüche 7 bis 11, **dadurch gekennzeichnet, dass** die Konzentration des Ethylens anhand der Absorption bei einer der folgenden Absorptionslinien in Nachbarschaft zu der Kohlendioxid-Absorptionslinie bei 4,2396 µm bestimmt wird:
- Ethylen-Absorptionslinien bei 4,2393 µm, 4,2394 µm oder 4,2397 µm.

14. Verfahren nach einem der Ansprüche 7 bis 11, **dadurch gekennzeichnet, dass** die Konzentration des Ethylens anhand der Absorption bei einer der folgenden Absorptionslinien in Nachbarschaft zu der Kohlendioxid-Absorptionslinie bei 4,23225 µm bestimmt wird:
- Ethylen-Absorptionslinien bei 4,23168 µm, 4,23195 µm, 4,2322 µm, 4,2323 µm oder 4,2328 µm.

15. Verfahren nach einem der Ansprüche 7 bis 11, **dadurch gekennzeichnet, dass** die Konzentration des Ethylens anhand der Absorption bei einer der folgenden Absorptionslinien in Nachbarschaft zu der Kohlendioxid-Absorptionslinie bei 4,2875 µm bestimmt wird:
- Ethylen-Absorptionslinien bei 4,2874 µm, 4,2876 µm, 4,2877 µm oder 4,2878 µm.

16. Verfahren nach einem der Ansprüche 7 bis 15, **dadurch gekennzeichnet, dass** die Konzentration des Ethylens anhand der Absorption bei einer der folgenden Absorptionslinien in Nachbarschaft zu der Kohlenmonoxid-Absorptionslinie bei 4,61 µm bestimmt wird:
- Ethylen-Absorptionslinien bei 4,6096 µm, 4,6097 µm, 4,6098 µm oder 4,6099 µm.

17. Verfahren nach einem der Ansprüche 7 bis 15, **dadurch gekennzeichnet, dass** die Konzentration des Ethylens anhand der Absorption bei einer der folgenden Absorptionslinien in Nachbarschaft zu der Kohlenmonoxid-Absorptionslinie bei 4,58765 µm bestimmt wird:
- Ethylen-Absorptionslinien bei 4,5872 µm, 4,5873 µm, 4,5875 µm, 4,5877 µm, 4,5878 µm oder 4,5879 µm.

18. Verfahren nach einem der Ansprüche 7 bis 15, **dadurch gekennzeichnet, dass** die Konzentration des Ethylens anhand der Absorption bei einer der folgenden Absorptionslinien in Nachbarschaft zu der Kohlenmonoxid-Absorptionslinie bei 4,74515 µm bestimmt wird:
- Ethylen-Absorptionslinien bei 4,74417 µm, 4,7449 µm, 4,74517 µm, 4,74527 µm oder 4,74537 µm.

19. Verfahren nach einem der Ansprüche 7 bis 18, **dadurch gekennzeichnet, dass** die Konzentration des Ethylens anhand der Absorption bei einer der folgenden Absorptionslinien in Nachbarschaft zu der Ammoniak-Absorptionslinie bei 6,1496 µm bestimmt wird:
- Ethylen-Absorptionslinien bei 6,1483 µm, 6,1484 µm, 6,14912 µm, 6, 14965 µm, 6, 14979 µm, 6, 14996 µm oder 6,15022 µm.

20. Verfahren nach einem der Ansprüche 7 bis 18, **dadurch gekennzeichnet, dass** die Konzentration des Ethylens anhand der Absorption bei einer der folgenden Absorptionslinien in Nachbarschaft zu der Ammoniak-Absorptionslinie bei 6,4046 µm oder 6,4066 µm bestimmt wird:
- Ethylen-Absorptionslinien bei 6,40146 µm, 6,40156 µm, 6,40471 µm, 6,40594 µm oder 6,40651 µm.

21. Verfahren nach einem der Ansprüche 7 bis 18, **dadurch gekennzeichnet, dass** die Konzentration des Ethylens anhand der Absorption bei einer der folgenden Absorptionslinien in Nachbarschaft zu der Ammoniak-Absorptionslinie bei 6,18425 µm bestimmt wird:
- Ethylen-Absorptionslinien bei 6,181 µm, 6,182 µm, 6,1838 µm, 6,1841 µm, 6,1844 µm, 6,1866 µm, 6,1881 µm, 6,1883 µm oder 6,1892 µm.

22. Verfahren nach Anspruch 2 in Verbindung mit einem der Ansprüche 7 bis 21, **dadurch gekennzeichnet, dass** mittels des weiteren Lasers die Konzentration des Ethylens anhand der Absorption bei einer der folgenden Absorptionslinien in Nachbarschaft zu der Methan-Absorptionslinie bei 3,53571 µm oder 3,53595 µm bestimmt wird:
- Ethylen-Absorptionslinien bei 3,53569 µm, 3,53577 µm oder 3,53599 µm.

23. Verfahren nach Anspruch 2 in Verbindung mit einem der Ansprüche 7 bis 21, **dadurch gekennzeichnet, dass** mittels des weiteren Lasers die Konzentration des Ethylens anhand der Absorption bei einer der folgenden Absorptionslinien in Nachbarschaft zu der Methan-Absorptionslinie bei 3,58134 µm bestimmt wird:
- Ethylen-Absorptionslinien bei 3,58107 µm, 3,58113 µm, 3,58115 µm, 3,58119 µm, 3,58129 µm, 3,58142 µm, 3,58145 µm oder 3,58158 µm.

24. Verfahren nach Anspruch 3 oder 4 in Verbindung mit einem der Ansprüche 7 bis 21, **dadurch gekennzeichnet, dass** mittels des weiteren Lasers oder eines vier durchstimmbaren Laser (16, 17, 18) die Konzentration des Ethylens anhand der Absorption bei einer der folgenden Absorptionslinien in Nachbarschaft zu der Ethan-Absorptionslinie bei 6,40545 µm, 6,40574 µm, 6,40646 µm, 6,40707 µm, 6,40737 µm, 6,40782 µm, 6,4082 µm oder 6,40962 µm und in Nachbarschaft zu der Ammoniak-Absorptionslinie bei 6,4066 µm oder 6,4046 µm bestimmt wird:
- Ethylen-Absorptionslinien bei 6,40594 µm, 6,40651 µm, 6,40681 µm, 6,40906 µm oder 6,40922 µm.

25. Verfahren nach einem der vorangehenden Ansprüche, wobei, wobei Laser vom Typ Quantenkaskadenlaser (Quantum Cascade Laser - QCL), Interbandkaskadenlaser (Interband Cascade Laser - ICL) oder oberflächenemittierender Laser mit vertikalem Resonator (Vertical Cavity Surface Emitting Laser - VCSEL) verwendet werden.

26. Verfahren nach einem der vorangehenden Ansprüche, wobei die Probe (2) in einer Messzelle (1) auf einen Druck im Bereich zwischen 10 mbar und 200 mbar, vorzugsweise kleiner als 100 mbar und besonders vorzugsweise kleiner 30 mbar gebracht wird.

27. Verfahren nach einem der vorangehenden Ansprüche, wobei eine Multipass-Messzelle (1) mit mehrfach gefalteten Strahlengang (14) verwendet wird.

28. Verfahren nach Anspruch 27, wobei die Länge des Strahlengangs (14) zwischen 5 m und 100 m, vorzugsweise um 10 m, beträgt.

29. Verfahren nach einem der vorhergehenden Ansprüche, wobei die Messung nach dem Verfahren der direkten Absorptionsspektroskopie oder der Wellenlängen-Modulationsspektroskopie (WMS) erfolgt.

30. Messsystem zur Bestimmung von Fremdgasen in Ethylen mit einem Reinheitsgrad bis größer als 99%, mit einer Messzelle (1) zur Aufnahme einer Probe (2) des Ethylens, mit vier in Bezug auf die Wellenlänge durchstimmbaren und die Messzelle (1) durchleuchtenden Lasern (16, 17, 18) , mit einer die Laser (16, 17, 18) steuernden Steuereinrichtung (22, 23), mit einem das Licht (14) der Laser (16, 17, 18) nach Durchleuchten der Probe (2) detektierenden Detektor (20) und mit einer dem Detektor (20) nachgeordneten Auswerteeinrichtung (24), die die Konzentrationen der Fremdgase anhand ihrer wellenlängenspezifischen Absorption des Lichts (14) bestimmt, wobei die Laser (16, 17, 18) und die Steuereinrichtung (22, 23) dazu ausgebildet sind, das Licht (14) in vier Wellenlängenbereichen zu erzeugen und durchzustimmen, von denen
- der erste Wellenlängenbereich die Wellenlänge einer aus den Acetylen-Absorptionslinien bei 3,02575 µm, 3,0223 µm, 3,0099 µm oder 7,423 µm ausgewählten Absorptionslinie enthält,
- der zweite Wellenlängenbereich die Wellenlänge einer aus den Kohlendioxid-Absorptionslinien bei 4,2347 µm, 4,2396 µm, 4,23225 µm oder 4,2875 µm ausgewählten Absorptionslinie enthält,
- der dritte Wellenlängenbereich die Wellenlänge einer aus den Kohlenmonoxid-Absorptionslinien bei 4,61 µm, 4,58765 µm oder 4,74515 µm ausgewählten Absorptionslinie enthält und
- der vierte Wellenlängenbereich die Wellenlänge einer aus den Ammoniak-Absorptionslinien bei 6,1496 µm, 6,4046 µm, 6,4066 µm oder 6,18425 µm ausgewählten Absorptionslinie enthält,
wobei die Laser (16, 17, 18) und die Steuereinrichtung (22, 23) ferner dazu ausgebildet sind, das Licht (14) im Zeitmultiplex zu erzeugen oder simultan zu erzeugen und dabei individuell zu modulieren, und
wobei die Auswerteeinrichtung (24) dazu ausgebildet ist, die Konzentrationen der Fremdgase Acetylen, Kohlendioxid, Kohlenmonoxid und Ammoniak anhand der Absorptionen bei den ausgewählten Absorptionslinien zu bestimmen.

## Claims

1. Method for determining foreign gases in ethylene with a degree of purity up to greater than 99%, wherein a sample (2) of the ethylene in a measuring cell (1) is irradiated with light (14), the wavelength of the light (14) is varied in order to scan selected absorption lines of the foreign gases acetylene, carbon dioxide, carbon monoxide and ammonia in a wavelength-dependent manner, the light is detected after passing through the sample (2), and the concentrations of the foreign gases are determined on the basis of the wavelength-specific absorption of the light (14) at the points of the scanned absorption lines,
- wherein the light (14) is generated in four wavelength ranges with the aid of four tunable lasers (16, 17, 18), of which the first wavelength range contains the wavelength of an absorption line selected from the the first wavelength range the wavelength of a from the acetylene absorption lines at 3.02575 µm, 3.0223 µm, 3.0099 µm or 7.423 µm for scanning purposes,
- the second wavelength range contains the wavelength of an absorption line selected from the carbon dioxide absorption lines at 4.2347 µm, 4.2396 µm, 4.23225 µm or 4.2875 µm for scanning purposes,
- the third wavelength range contains the wavelength of an absorption line selected from the carbon monoxide absorption lines at 4.61 µm, 4.58765 µm or 4.74515 µm for scanning purposes and
- the fourth wavelength range contains the wavelength of an absorption line selected from the ammonia absorption lines at 6.1496 µm, 6.4046 µm, 6.4066 µm or 6.18425 µm for scanning purposes,
and wherein with the aid of the four tunable lasers (16, 17, 18) the light (14) is generated in the time multiplex or simultaneously and is in the process modulated individually.

2. Method according to claim 1, **characterised in that** a further laser is used in addition to determine the concentration of the foreign gas methane on the basis of the absorption at one of the following absorption lines:
- methane absorption lines at 3.53571 µm, 3.53595 µm or 3.58134 µm.

3. Method according to claim 1 or 2, **characterised in that** an additional laser is used in addition to determine the concentration of the foreign gas ethane on the basis of the absorption at one of the following absorption lines:
- ethane absorption lines at 6.40545 µm, 6.40574 µm, 6.40646 µm, 6.40707 µm, 6.40737 µm, 6.40782 µm, 6.4082 µm or 6.40962 µm.

4. Method according to claim 1 or 2, **characterised in that** one of four tunable lasers (16, 17, 18) is used in addition to determine the concentration of the foreign gas ethane on the basis of the absorption at one of the following absorption lines:
- ethane absorption lines at 6.40545 µm, 6.40574 µm, 6.40646 µm, 6.40707 µm, 6.40737 µm, 6.40782 µm, 6.4082 µm or 6.40962 µm,
wherein the ethane absorption line is scanned in a wavelength-dependent manner together with the ammonia absorption line at 6.4046 µm or at 6.4066 µm.

5. Method according to one of the preceding claims, **characterised in that** an additional laser is used in addition to determine the concentration of the foreign gas water on the basis of the absorption at the water absorption line at 6.1854 µm.

6. Method according to one of claims 1 to 4, **characterised in that** one of four tunable lasers (16, 17, 18) is used in addition to determine the concentration of the foreign gas water on the basis of the absorption in the water absorption line at 6.1854 µm, wherein the water absorption line is scanned in a wavelength-dependent manner together with the ammonia absorption line at 6.18425 µm.

7. Method according to one of the preceding claims, **characterised in that** one of four tunable lasers (16, 17, 18) is used in addition to determine the concentration of the ethylene on the basis of the absorption in at least one ethylene absorption line which is in proximity to at least one of the selected and scanned absorption lines of the foreign gases acetylene, carbon dioxide, carbon monoxide and ammonia and is scanned together with the latter in a wavelength-dependent manner.

8. Method according to claim 7, **characterised in that** the concentration of the ethylene is determined on the basis of the absorption in one of the following absorption lines in proximity to the acetylene absorption line at 3.02575 µm:
- ethylene absorption lines at 3.02529 µm, 3.02556 µm, 3.02559 µm, 3.0258 µm or 3.02588 µm.

9. Method according to claim 7, **characterised in that** the concentration of the ethylene is determined on the basis of the absorption in one of the following absorption lines in proximity to the acetylene absorption line at 3.0223 µm:
- ethylene absorption lines at 3.02217 µm, 3.02229 µm, 3.02235 µm, 3.02249 µm or 3.02265 µm.

10. Method according to claim 7, **characterised in that** the concentration of the ethylene is determined on the basis of the absorption in one of the following absorption lines in proximity to the acetylene absorption line at 3.0099 µm:
- ethylene absorption lines at 3.00919 µm, 3.00937 µm, 3.00947 µm, 3.0096 µm, 3.00979 µm, 3.00993 µm or 3.00999 µm.

11. Method according to claim 7, **characterised in that** the concentration of the ethylene is determined on the basis of the absorption in one of the following absorption lines in proximity to the acetylene absorption line at 7.423 µm:
- ethylene absorption lines at 7.42398 µm, 7.42435 µm or 7.42483 µm.

12. Method according to one of claims 7 to 11, **characterised in that** the concentration of the ethylene is determined on the basis of the absorption in one of the following absorption lines in proximity to the carbon dioxide absorption line at 4.2347 µm:
- ethylene absorption lines at 4.2343 µm, 4.2345 µm or 4.2348 µm.

13. Method according to one of claims 7 to 11, **characterised in that** the concentration of the ethylene is determined on the basis of the absorption in one of the following absorption lines in proximity to the carbon dioxide absorption line at 4.2396 µm:
- ethylene absorption lines at 4.2393 µm, 4.2394 µm or 4.2397 µm.

14. Method according to one of claims 7 to 11, **characterised in that** the concentration of the ethylene is determined on the basis of the absorption in one of the following absorption lines in proximity to the carbon dioxide absorption line at 4.23225 µm:
- ethylene absorption lines at 4.23168 µm, 4.23195 µm, 4.2322 µm, 4.2323 µm or 4.2328 µm.

15. Method according to one of claims 7 to 11, **characterised in that** the concentration of the ethylene is determined on the basis of the absorption in one of the following absorption lines in proximity to the carbon dioxide absorption line at 4.2875 µm:
- ethylene absorption lines at 4.2874 µm, 4.2876 µm, 4.2877 µm or 4.2878 µm.

16. Method according to one of claims 7 to 15, **characterised in that** the concentration of the ethylene is determined on the basis of the absorption in one of the following absorption lines in proximity to the carbon monoxide absorption line at 4.61 µm:
- ethylene absorption lines at 4.6096 µm, 4.6097 µm, 4.6098 µm or 4.6099 µm.

17. Method according to one of claims 7 to 15, **characterised in that** the concentration of the ethylene is determined on the basis of the absorption in one of the following absorption lines in proximity to the carbon monoxide absorption line at 4.58765 µm:
- ethylene absorption lines at 4.5872 µm, 4.5873 µm, 4.5875 µm, 4.5877 µm, 4.5878 µm or 4.5879 µm.

18. Method according to one of claims 7 to 15, **characterised in that** the concentration of the ethylene is determined on the basis of the absorption in one of the following absorption lines in proximity to the carbon monoxide absorption line at 4.74515 µm:
- ethylene absorption lines at 4.74417 µm, 4.7449 µm, 4.74517 µm, 4.74527 µm or 4.74537 µm.

19. Method according to one of claims 7 to 18, **characterised in that** the concentration of the ethylene is determined on the basis of the absorption in one of the following absorption lines in proximity to the ammonia absorption line at 6.1496 µm:
- ethylene absorption lines at 6.1483 µm, 6.1484 µm, 6.14912 µm, 6.14965 µm, 6.14979 µm, 6.14996 µm or 6.15022 µm.

20. Method according to one of claims 7 to 18, **characterised in that** the concentration of the ethylene is determined on the basis of the absorption in one of the following absorption lines in proximity to the ammonia absorption line at 6.4046 µm or 6.4066 µm:
- Ethylene absorption lines at 6.40146 µm, 6.40156 µm, 6.40471 µm, 6.40594 µm or 6.40651 µm.

21. Method according to one of claims 7 to 18, **characterised in that** the concentration of the ethylene is determined on the basis of the absorption in one of the following absorption lines in proximity to the ammonia absorption line at 6.18425 µm:
- ethylene absorption lines at 6.181 µm, 6.182 µm, 6.1838 µm, 6.1841 µm, 6.1844 µm, 6.1866 µm, 6.1881 µm, 6.1883 µm or 6.1892 µm.

22. Method according to claim 2 in conjunction with one of claims 7 to 21, **characterised in that** the further laser is used to determine the concentration of the ethylene on the basis of the absorption in one of the following absorption lines in proximity to the methane absorption line at 3.53571 µm or 3.53595 µm:
- ethylene absorption lines at 3.53569 µm, 3.53577 µm or 3.53599 µm.

23. Method according to claim 2 in conjunction with one of claims 7 to 21, **characterised in that** the further laser is used to determine the concentration of the ethylene on the basis of the absorption in one of the following absorption lines in proximity to the methane absorption line at 3.58134 µm:
- ethylene absorption lines at 3.58107 µm, 3.58113 µm, 3.58115 µm, 3.58119 µm, 3.58129 µm, 3.58142 µm, 3.58145 µm or 3.58158 µm.

24. Method according to claim 3 or 4 in conjunction with one of claims 7 to 21, **characterised in that** the further laser or one of four tunable lasers (16, 17, 18) is used to determine the concentration of the ethylene on the basis of the absorption in one of the following absorption lines in proximity to the ethane absorption line at 6.40545 µm, 6.40574 µm, 6.40646 µm, 6.40707 µm, 6.40737 µm, 6.40782 µm, 6.4082 µm or 6.40962 µm and in proximity to the ammonia absorption line at 6.4066 µm or 6.4046 µm:
- ethylene absorption lines at 6.40594 µm, 6.40651 µm, 6.40681 µm, 6.40906 µm or 6.40922 µm.

25. Method according to one of the preceding claims, wherein lasers of the Quantum Cascade Laser (QCL), Interband Cascade Laser (ICL) or Vertical Cavity Surface Emitting Laser (VCSEL) type are used.

26. Method according to one of the preceding claims, wherein the sample (2) in a measuring cell (1) is brought to a pressure in the range between 10 mbar and 200 mbar, preferably less than 100 mbar and particularly preferably less than 30 mbar.

27. Method according to one of the preceding claims, wherein a multipass-measuring cell (1) having a multiply folded beam path (14) is used.

28. Method according to claim 27, wherein the length of the beam path (14) is between 5 m and 100 m, preferably approximately 10 m.

29. Method according to one of the preceding claims, wherein the measurement is carried out according to the method of direct absorption spectroscopy or wavelength modulation spectroscopy (WMS).

30. Measurement system for determining foreign gases in ethylene with a degree of purity up to greater than 99%, having a measuring cell (1) for receiving a sample (2) of the ethylene, having four lasers (16, 17, 18) which can be tuned in relation to the wavelength and pass through the measuring cell (1), having a control device (22, 23) which controls the lasers (16, 17, 18), having a detector (20) which detects the light (14) of the lasers (16, 17, 18) after transillumination of the sample (2), and having an evaluation device (24) which is arranged downstream of the detector (20) and determines the concentrations of foreign gases based on their wavelength-specific absorption of the light (14), wherein the lasers (16, 17, 18) and the control device (22, 23) are designed to generate the light (14) in four wavelength ranges and to tune the same, of which
- the first wavelength range contains the wavelength of an absorption line selected from the acetylene absorption lines at 3.02575 µm, 3.0223 µm, 3.0099 µm or 7.423 µm,
- the second wavelength range contains the wavelength of an absorption line selected from the carbon dioxide absorption lines at 4.2347 µm, 4.2396 µm, 4.23225 µm or 4.2875 µm,
- the third wavelength range contains the wavelength of an absorption line selected from the carbon monoxide absorption lines at 4.61 µm, 4.58765 µm or 4.74515 µm and
- the fourth wavelength range contains the wavelength of an absorption line selected from the ammonia absorption lines at 6.1496 µm, 6.4046 µm, 6.4066 µm or 6.18425 µm,
wherein the lasers (16, 17, 18) and the control device (22, 23) are further embodied to generate the light (14) in the time multiplex or simultaneously and in the process to modulate the same individually, and
wherein the evaluation device (24) is embodied to determine the concentrations of the foreign gases acetylene, carbon dioxide, carbon monoxide and ammonia on the basis of the absorptions for the selected absorption lines.

## Revendications

1. Procédé de détermination de gaz étrangers dans de l'éthylène ayant un degré de pureté allant jusqu'à plus de 99 %, dans lequel on expose un échantillon (2) de l'éthylène à de la lumière (14) dans une cellule (1) de mesure, on fait varier la longueur d'onde de la lumière (14) pour balayer en fonction de la longueur d'onde des raies d'absorption sélectionnées des gaz étrangers acétylène, dioxyde de carbone, monoxyde de carbone et ammoniac,
on détecte la lumière après qu'elle a traversé dans l'échantillon (2) et on détermine les concentrations en les gaz étrangers à l'aide de l'absorption, spécifique aux longueurs d'onde, de la lumière (14) aux emplacements des raies d'absorption balayées,
- dans lequel on produit la lumière (14) à l'aide de quatre lasers (16, 17, 18) accordables dans quatre domaines de longueur d'onde, dont le premier domaine de longueur d'onde contient la longueur d'onde d'une raie d'absorption sélectionnée pour le balayage parmi les raies d'absorption de l'acétylène à 3,02575 µm, 3,0223 µm, 3,0099 µm ou 7,423 µm,
- le deuxième domaine de longueur d'onde contient la longueur d'onde d'une raie d'absorption sélectionnée pour le balayage parmi les raies d'absorption du dioxyde de carbone à 4,2347 µm, 4,2396 µm, 4,23225 µm ou 4,2875 µm,
- le troisième domaine de longueur d'onde contient la longueur d'onde d'une raie d'absorption sélectionnée pour le balayage parmi les raies d'absorption du monoxyde de carbone à 4,61 µm, 4,58765 µm ou 4,74515 µm et
- le quatrième domaine de longueur d'onde contient la longueur d'onde d'une raie d'absorption sélectionnée pour le balayage parmi les raies d'absorption de l'ammoniac à 6,1496 µm, 6,4046 µm, 6,4066 µm ou 6,18425 µm,
et dans lequel on produit de la lumière (14) en multiplexage dans le temps ou simultanément à l'aide des quatre lasers (16, 17, 18) accordables et on la module ainsi individuellement.

2. Procédé suivant la revendication 1, **caractérisé en ce qu'**au moyen d'un autre laser on détermine supplémentairement la concentration du gaz étranger méthane à l'aide de l'absorption à l'une des raies d'absorption suivantes :
- raies d'absorption du méthane à 3,53571 µm, 3,53595 µm ou 3,58134 µm.

3. Procédé suivant la revendication 1 ou 2, **caractérisé en ce qu'**au moyen d'un laser supplémentaire on détermine la concentration du gaz étranger éthane à l'aide de l'absorption à l'une des raies d'absorption suivantes :
- raies d'absorption de l'éthane à 6,40545 µm, 6,40574 µm, 6,40646 µm, 6,40707 µm, 6,40737 µm, 6,40782 µm, 6,4082 µm ou 6,40962 µm.

4. Procédé suivant l'une des revendications 1 ou 2, **caractérisé en ce qu'**au moyen de l'un des quatre lasers (16, 17, 18) accordables, on détermine supplémentairement la concentration du gaz étranger éthane à l'aide de l'absorption à l'une des raies d'absorption suivantes :
- raies d'absorption de l'éthane à 6,40545 µm, 6,40574 µm, 6,40646 µm, 6,40707 µm, 6,40737 µm, 6,40782 µm, 6,4082 µm ou 6,40962 µm, dans lequel on balaie en fonction de la longueur d'onde la raie d'absorption de l'éthane conjointement avec la raie de l'absorption de l'ammoniac à 6,4046 µm ou à 6,4066 µm.

5. Procédé suivant l'une des revendications précédentes, **caractérisé en ce que** l'on détermine au moyen d'un laser supplémentaire supplémentairement la concentration du gaz étranger eau à l'aide de l'absorption à la raie d'absorption de l'eau à 6,1854 µm.

6. Procédé suivant l'une des revendications 1 à 4, **caractérisé en ce qu'**au moyen de l'un des quatre lasers (16, 17, 18) accordables on détermine supplémentairement la concentration du gaz étranger eau à l'aide de l'absorption à la raie d'absorption de l'eau à 6,1854 µm, dans lequel on balaie en fonction de la longueur d'onde la raie d'absorption de l'eau conjointement avec la raie de l'absorption de l'ammoniac à 6,18425 µm.

7. Procédé suivant l'une des revendications précédentes, **caractérisé en ce qu'**au moyen de l'un des quatre lasers (16, 17, 18) accordables on détermine supplémentairement la concentration de l'éthylène, à l'aide de l'absorption à au moins une raie d'absorption de l'éthylène que l'on balaie au voisinage d'au moins l'une des raies d'absorption sélectionnées et balayées des gaz étrangers acétylène, dioxyde de carbone, monoxyde de carbone et ammoniac et que l'on balaie en fonction de la longueur d'onde ensemble avec celle-ci.

8. Procédé suivant la revendication 7, **caractérisé en ce que** l'on détermine la concentration de l'éthylène à l'aide de l'absorption à l'une des raies d'absorption suivantes, au voisinage de la raie d'absorption de l'acétylène à 3,02575 µm :
- raies d'absorption de l'éthylène à 3, 02529 µm, 3, 02556 µm, 3, 02559 µm, 3,0258 µm ou 3,02588 µm.

9. Procédé suivant la revendication 7, **caractérisé en ce que** l'on détermine la concentration de l'éthylène à l'aide de l'absorption à l'une des raies d'absorption suivantes au voisinage de la raie de l'absorption de l'acétylène à 3,0223 µm :
- raies d'absorption de l'éthylène à 3, 02217 µm, 3, 02229 µm, 3, 02235 µm, 3,02249 µm ou 3,02265 µm.

10. Procédé suivant la revendication 7, **caractérisé en ce que** l'on détermine la concentration de l'éthylène à l'aide de l'absorption à l'une des raies d'absorption suivantes au voisinage de la raie d'absorption de l'acétylène à 3,0099 µm :
- raies d'absorption de l'éthylène à 3, 00919 µm, 3, 00937 µm, 3, 00947 µm, 3,0096 µm, 3,00979 µm, 3,00993 µm ou 3,00999 µm.

11. Procédé suivant la revendication 7, **caractérisé en ce que** l'on détermine la concentration de l'éthylène à l'aide de l'absorption à l'une des raies d'absorption suivantes au voisinage de la raie d'absorption de l'acétylène à 7,423 µm :
- raies d'absorption de l'éthylène à 7,42398 µm, 7,42435 µm ou 7,42483 µm.

12. Procédé suivant l'une des revendications 7 à 11, **caractérisé en ce que** l'on détermine la concentration de l'éthylène à l'aide de l'absorption à l'une des raies d'absorption suivantes au voisinage de la raie d'absorption du dioxyde de carbone à 4,2347 µm :
- raies d'absorption de l'éthylène à 4,2343 µm, 4,2345 µm ou 4,2348 µm.

13. Procédé suivant l'une des revendications 7 à 11, **caractérisé en ce que** l'on détermine la concentration de l'éthylène à l'aide de l'absorption à l'une des raies d'absorption suivantes au voisinage de la raie d'absorption du dioxyde de carbone à 4,2396 µm :
- raies d'absorption de l'éthylène à 4,2393 µm, 4,2394 µm ou 4,2397 µm.

14. Procédé suivant l'une des revendications 7 à 11, **caractérisé en ce que** l'on détermine la concentration de l'éthylène à l'aide de l'absorption à l'une des raies d'absorption suivantes au voisinage de la raie d'absorption du dioxyde de carbone à 4,23225 µm :
- raies d'absorption de l'éthylène à 4,23168 µm, 4,23195 µm, 4,2322 µm, 4,2323 µm ou 4,2328 µm.

15. Procédé suivant l'une des revendications 7 à 11, **caractérisé en ce que** l'on détermine la concentration de l'éthylène à l'aide de l'absorption à l'une des raies d'absorption suivantes au voisinage de la raie d'absorption du dioxyde de carbone à 4,2875 µm :
- raies d'absorption de l'éthylène à 4,2874 µm, 4,2876 µm, 4,2877 µm, ou 4,2878 µm.

16. Procédé suivant l'une des revendications 7 à 15, **caractérisé en ce que** l'on détermine la concentration de l'éthylène à l'aide de l'absorption à l'une des raies d'absorption suivantes au voisinage de la raie d'absorption du monoxyde de carbone à 4,61 µm :
- raies d'absorption de l'éthylène à 4,6096 µm, 4,6097 µm, 4,6098 µm, ou 4,6099 µm.

17. Procédé suivant l'une des revendications 7 à 15, **caractérisé en ce que** l'on détermine la concentration de l'éthylène à l'aide de l'absorption à l'une des raies d'absorption suivantes au voisinage de la raie d'absorption du monoxyde de carbone à 4,58765 µm :
- raies d'absorption de l'éthylène à 4,5872 µm, 4,5873 µm, 4,5875 µm, 4,5877 µm, 4,5878 µm ou 4,5879 µm.

18. Procédé suivant l'une des revendications 7 à 15, **caractérisé en ce que** l'on détermine la concentration de l'éthylène à l'aide de l'absorption à l'une des raies d'absorption suivantes au voisinage de la raie d'absorption du monoxyde de carbone à 4,74515 µm :
- raies d'absorption de l'éthylène à 4,74417 µm, 4,7449 µm, 4,74517 µm, 4,74527 µm, ou 4,74537 µm.

19. Procédé suivant l'une des revendications 7 à 18, **caractérisé en ce que** l'on détermine la concentration de l'éthylène à l'aide de l'absorption à l'une des raies d'absorption suivantes au voisinage de la raie d'absorption de l'ammoniac à 6,1496 µm :
- raies d'absorption de l'éthylène à 6,1483 µm, 6,1484 µm, 6,14912 µm, 6,14965 µm, 6,14979 µm, 6,14996 µm ou 6,15022 µm.

20. Procédé suivant l'une des revendications 7 à 18, **caractérisé en ce que** l'on détermine la concentration de l'éthylène à l'aide de l'absorption à l'une des raies d'absorption suivantes au voisinage de la raie d'absorption de l'ammoniac à 6,4046 µm ou à 6,4066 µm :
- raies d'absorption de l'éthylène à 6,40146 µm, 6,40156 µm, 6,40471 µm, 6,40594 µm ou 6,40651 µm.

21. Procédé suivant l'une des revendications 7 à 18, **caractérisé en ce que** l'on détermine la concentration de l'éthylène à l'aide de l'absorption à l'une des raies d'absorption suivantes au voisinage de la raie d'absorption de l'ammoniac à 6,18425 µm :
- raies d'absorption de l'éthylène à 6,181 µm, 6,182 µm, 6,1838 µm, 6,1841 µm, 6,1844 µm, 6,1866 µm, 6,1881 µm, 6,1883 µm ou 6,1892 µm.

22. Procédé suivant la revendication 2 en liaison avec les revendications 7 à 21, **caractérisé en ce qu'**au moyen de l'autre laser, on détermine la concentration de l'éthylène à l'aide de l'absorption à l'une des raies d'absorption suivantes au voisinage de la raie d'absorption du méthane à 3,53571 µm ou à 3,53595 µm :
- raies d'absorption de l'éthylène à 3,53569 µm, 3,53577 µm ou 3,53599 µm.

23. Procédé suivant la revendication 2 en liaison avec les revendications 7 à 21, **caractérisé en ce qu'**au moyen de l'autre laser, on détermine la concentration de l'éthylène à l'aide de l'absorption à l'une des raies d'absorption suivantes au voisinage de la raie d'absorption du méthane à 3,58134 µm :
- raies d'absorption de l'éthylène à 3,58107 µm, 3,58113 µm, 3,58115 µm, 3,58119 µm, 3,58129 µm, 3,58142 µm, 3,58145 µm ou 3,58158 µm.

24. Procédé suivant la revendication 3 ou 4 en liaison avec l'une des revendications 7 à 21, **caractérisé en ce qu'**au moyen de l'autre laser ou de l'un des quatre lasers (16, 17, 18) accordables, on détermine la concentration de l'éthylène à l'aide de l'absorption à l'une des raies d'absorption suivantes au voisinage de la raie d'absorption de l'éthane à 6,40545 µm, 6,40574 µm, 6,40646 µm, 6,40707 µm, 6,40737 µm, 6,40782 µm, 6,4082 µm ou 6,40962 µm et au voisinage de la raie d'absorption de l'ammoniac à 6,4066 pm ou 6,4046 µm :
- raies d'absorption de l'éthylène à 6,40594 µm, 6,40651 µm, 6,40681 µm, 6,40906 µm ou 6,40922 µm.

25. Procédé suivant l'une des revendications précédentes, dans lequel on utilise des lasers du type laser quantique à cascade (Quantum Cascade Laser - QCL), des lasers à interbande à cascade (Interband Cascade Laser - ICL) ou des lasers à émission en surface à résonnateur vertical (Vertical Cavity Surface Emitting Laser - VCSEL) .

26. Procédé suivant l'une des revendications précédentes, dans lequel on met l'échantillon (2) dans une cellule (1) de mesure sous une pression dans la plage comprise entre 10 mbar et 200 mbar, de préférence plus basse que 100 mbar et d'une manière particulièrement préférée plus basse que 30 mbar.

27. Procédé suivant l'une des revendications précédentes, dans lequel on utilise une cellule (1) de mesure multipass ayant un trajet (14) de rayonnement coudé plusieurs fois.

28. Procédé suivant la revendication 27, dans lequel la longueur du trajet (14) de rayonnement est comprise entre 5 m et 100 m, en étant de préférence de 10 m.

29. Procédé suivant l'une des revendications précédentes, dans lequel on effectue la mesure par le procédé de la spectroscopie d'absorption directe ou de la spectroscopie de modulation de longueur d'onde (WMS).

30. Système de mesure pour la détermination de gaz étrangers dans de l'éthylène ayant un degré de pureté jusqu'à plus grand que 99 %, comprenant une cellule (1) de mesure de réception d'un échantillon (2) de l'éthylène, comprenant quatre lasers (16, 17, 18) pouvant être accordés en ce qui concerne la longueur d'onde et éclairant la cellule (1) de mesure, comprenant un dispositif (22, 23) de commande commandant les lasers (16, 17, 18), comprenant un détecteur (20) détectant la lumière (14) des lasers (16, 17, 18) après traversée de l'échantillon (2) et comprenant un dispositif (24) d'exploitation monté en aval du détecteur (20) et déterminant les concentrations des gaz étrangers à l'aide de leur absorption spécifique à la longueur d'onde de la lumière (14), dans lequel les lasers (16, 17, 18) et le dispositif (22, 23) de commande sont constitués pour produire et faire varier la lumière (14) dans quatre domaines de longueurs d'ondes dont :
- le premier domaine de longueur d'onde contient la longueur d'onde d'une raie d'absorption sélectionnée parmi les raies d'absorption de l'acétylène à 3,02575 µm, 3,0223 µm, 3,0099 µm ou 7,423 µm,
- le deuxième domaine de longueur d'onde contient la longueur d'onde d'une raie d'absorption sélectionnée pour le balayage parmi les raies d'absorption du dioxyde de carbone à 4,2347 µm, 4,2396 µm, 4,23225 µm ou 4,2875 µm,
- le troisième domaine de longueur d'onde contient la longueur d'onde d'une raie d'absorption sélectionnée pour le balayage parmi les raies d'absorption du monoxyde de carbone à 4,61 µm, 4,58765 µm ou 4,74515 µm et
- le quatrième domaine de longueur d'onde contient la longueur d'onde d'une raie d'absorption sélectionnée pour le balayage parmi les raies d'absorption de l'ammoniac à 6,1496 µm, 6,4046 µm, 6,4066 µm ou 6,18425 µm,
dans lequel les lasers (16, 17, 18) et le dispositif (22, 23) de commande sont constitués en outre pour produire la lumière (14) en multiplexage dans le temps ou simultanément et ainsi la moduler individuellement, et
dans lequel le dispositif (24) d'exploitation est constitué pour déterminer les concentrations des gaz étrangers, acétylène, dioxyde de carbone, monoxyde de carbone et ammoniac à l'aide des absorptions aux raies d'absorption sélectionnées.
